(19) Europäisches Patentamt / European Patent Office / Office européen des brevets

(11) **EP 4 564 702 A1**

(12) **EUROPEAN PATENT APPLICATION**

(43) Date of publication:
04.06.2025 Bulletin 2025/23

(21) Application number: 24216636.1

(22) Date of filing: 29.11.2024

(51) International Patent Classification (IPC):
*H04B 7/06* (2006.01)

(52) Cooperative Patent Classification (CPC):
H04B 7/0617; H04B 7/0695

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.12.2023 KR 20230172166

(71) Applicant: Ajou University Industry-Academic
Cooperation
Foundation
Suwon-si, Gyeonggi-do 16499 (KR)

(72) Inventor: OH, Seongkeun
16950 YONGIN-SI (KR)

(74) Representative: Plasseraud IP
104 Rue de Richelieu
CS92104
75080 Paris Cedex 02 (FR)

(54) **DEVICE AND METHOD FOR CONTROLLING BEAMWIDTH OF DIRECTIONAL BEAM IN A MULTI-BEAM COMMUNICATION SYSTEM**

(57) The present disclosure relates to a control device for controlling a beamwidth of a directional beam in a multi-beam communication system, and a directional beamwidth control device according to an embodiment is a control device included in a reference communication device and performing communication with a target communication device, the control device including: an antenna part configured to generate a plurality of directional beams; a transceiver part including at least one transceiver unit (TXRU) configured to supply signal to the antenna part or receive signal from the antenna part; and a control part configured to control the beam generation of the antenna part, and to control TXRU assignment of the transceiver part and signal transmission and reception, wherein the control part controls the antenna part to generate a beam by determining a direction and beamwidth of the beam, and performs control to determine the beamwidth based on a kinematic quantity parameter according to movement of at least one of the reference communication device and other communication device and a directional distance parameter of the reference communication device and the other communication device, wherein the directional distance parameter is a parameter for quantifying a distance along a transmission direction between the reference communication device and the other communication device, and wherein the kinematic quantity parameter is a parameter for quantifying motion characteristics according to movement of at least one of the reference communication device and the other communication device.

EP 4 564 702 A1

**Description**

**TECHNICAL FIELD**

The embodiment relates to a device and method for controlling a beamwidth of a directional beam in a multi-beam communication system.

**BACKGROUND**

In a mobile communication scheme recently developed to use a millimeter wave band, such as a 5G NR (new radio) system, a multi-beam is used in gNodeB (gNB) and user equipment (UE) for the purposes of securing a link budget due to radio wave attenuation and the like and eliminating interference. However, in such an existing scheme, a beam codebook is utilized and the number of directional beams in the beam codebook is selected, but an option for adaptively changing a beamwidth according to a communication environment is not defined. Thus, the existing scheme is a scheme for defining a certain number of directional beams and maintaining a communication link by switching to an adjacent or different directional beam as needed.

Prior Art Documents

Patent Document

Korean Patent Publication No. 10-2004-0059657 (July 6, 2004), "Wireless communication method and device using high-speed sweeping of antenna radiation beam"

**SUMMARY**

A device or method capable of preventing interruption of a communication link and excessive system load by controlling not only a direction of a directional beam but also a beamwidth of the directional beam in consideration of change in a communication environment due to movement of a reference communication device and another communication device is required.
Further, a device or method capable of maximizing transmission efficiency and quality of service while improving the stability of a communication link and the stability of service by flexibly controlling a beamwidth of a directional beam in consideration of not only a kinematic quantity parameter due to movement of a reference communication device and another communication device but also a directional distance parameter between the reference communication device and the other device is required.
Further, a device or method capable of efficiently controlling a beamwidth by using a beamwidth defined in consideration of a kinematic quantity parameter due to movement of a reference communication device or another communication device and a directional distance parameter between the reference communication device and the other device, as a control variable for determining a beam layer of a multi-layer beam codebook configured according to the beamwidth is required.
A directional beamwidth control device according to an embodiment is a control device included in a reference communication device and performing communication with a target communication device, the control device including: an antenna part configured to generate a plurality of directional beams; a transceiver part including at least one transceiver unit (TXRU) configured to supply signal to the antenna part or receive signal from the antenna part; and a control part configured to control the beam generation of the antenna part, and to control TXRU assignment of the transceiver part and signal transmission and reception, wherein the control part controls the antenna part to generate a beam by determining a direction and beamwidth of the beam, and performs control to determine the beamwidth based on a kinematic quantity parameter according to movement of at least one of the reference communication device and other communication device and a directional distance parameter of the reference communication device and the other communication device, wherein the directional distance parameter is a parameter for quantifying a distance along a transmission direction between the reference communication device and the other communication device, and wherein the kinematic quantity parameter is a parameter for quantifying motion characteristics according to movement of at least one of the reference communication device and the other communication device.
Further, the directional distance parameter is one of an actual inter-device distance and an inter-device beam centerline distance between the reference communication device and the other communication device, and the inter-device beam centerline distance is a component of the actual inter-device distance projected onto a centerline of a beam generated from the reference communication device.
Further, the kinematic quantity parameter is a kinematic quantity of one of a time, a position, a distance traveled, a displacement, a vertical displacement, a speed, a velocity, a vertical velocity, an acceleration, a relative time between devices, a relative position between devices, a relative distance traveled between devices, a relative displacement between devices, a relative vertical displacement between devices, a relative speed between devices, a relative velocity between devices, a relative vertical velocity between devices, and a relative acceleration between devices, or a kinematic quantity derived from a combination of at least two thereof.

Further, the kinematic quantity parameter further includes a derived kinematic quantity parameter, wherein the derived kinematic quantity parameter is generated from a conversion of the kinematic quantity for converting a vector kinematic quantity to a scalar kinematic quantity, a combination of kinematic quantities for deriving another kinematic quantity from a combination of at least two kinematic quantities, or a conversion of the combination of kinematic quantities, or a combination of the derived kinematic quantities.

When determining the beamwidth of the directional beam based on the kinematic quantity parameter and the directional distance parameter, the beamwidth is determined, to widen as the kinematic quantity parameter or a magnitude of the kinematic quantity parameter increases and to narrow as the kinematic quantity parameter or the magnitude of the kinematic quantity parameter decreases, or to narrow as the directional distance parameter increases and to widen as the directional distance parameter decreases.

When determining the beamwidth of the directional beam based on the kinematic quantity parameter and the directional distance parameter, the beamwidth is determined to be proportional to the kinematic quantity parameter or a magnitude of the kinematic quantity parameter or to be inversely proportional to the directional distance parameter.

When determining the beamwidth of the directional beam based on the kinematic quantity parameter and the directional distance parameter, the beamwidth is determined based on a control parameter combination that is a combination of the kinematic quantity parameter and the directional distance parameter.

The control parameter combination is defined by dividing the kinematic quantity parameter or a magnitude of the kinematic quantity parameter by the directional distance parameter.

Further, the control parameter combination is defined, by dividing a speed which is the kinematic quantity parameter by an actual inter-device distance which is the directional distance parameter, by dividing the speed which is the kinematic quantity parameter by an inter-device beam centerline distance which is the directional distance parameter, by dividing a relative speed between devices which is the kinematic quantity parameter by the actual inter-device distance which is the directional distance parameter, by dividing the relative speed between devices which is the kinematic quantity parameter by the inter-device beam centerline distance which is the directional distance parameter, by dividing a magnitude of a velocity which is a magnitude of the kinematic quantity parameter by the actual inter-device distance which is the directional distance parameter, by dividing the magnitude of the velocity which is a magnitude of the kinematic quantity parameter by the inter-device beam centerline distance which is the directional distance parameter, by dividing a magnitude of a relative velocity between devices which is a magnitude of the kinematic quantity parameter by the actual inter-device distance which is the directional distance parameter, by dividing the magnitude of the relative velocity between devices which is a magnitude of the kinematic quantity parameter by the inter-device beam centerline distance which is the directional distance parameter, by dividing a magnitude of a vertical velocity which is a magnitude of the kinematic quantity parameter by the actual inter-device distance which is the directional distance parameter, by dividing the magnitude of the vertical velocity which is a magnitude of the kinematic quantity parameter by the inter-device beam centerline distance which is the directional distance parameter, by dividing a magnitude of a relative vertical velocity between devices which is a magnitude of the kinematic quantity parameter by the actual inter-device distance which is the directional distance parameter, or by dividing the magnitude of the relative vertical velocity between devices which is a magnitude of the kinematic quantity parameter by the inter-device beam centerline distance which is the directional distance parameter.

When determining the beamwidth based on the control parameter combination, the beamwidth is determined to widen as the control parameter combination or a magnitude of the control parameter combination increases and to narrow as the control parameter combination or the magnitude of the control parameter combination decreases.

When determining the beamwidth based on the control parameter combination, the beamwidth is determined to be proportional to the control parameter combination or a magnitude of the control parameter combination.

Further, the antenna part includes at least one antenna set according to an antenna array structure composed of at least two antenna elements or a parasitic array structure according to a parasitic array antenna including one active element and at least two parasitic elements, the at least one antenna set generates a plurality of directional beams, when the at least one antenna set generating the plurality of directional beams, one antenna set generates the plurality of directional beams or each of at least two antenna sets generates at least one directional beam, and when each of the at least two antenna sets generating the at least one directional beam, each of the at least two antenna sets generates at least one different directional beam or the at least two antenna sets generate at least one same directional beam.

The beamwidth is a control decision variable for controlling an operation of the reference communication device, and is one of a required beamwidth, a beamwidth limit, a desired beamwidth, an optimum beamwidth, a representative value in a beamwidth section, a representative beamwidth value of a beam codebook, and a beamwidth estimate.

When determining the beamwidth of the directional beam, the determination of the beamwidth includes having a multi-layer beam codebook according to beamwidth, and is to determining the beam layer of the multi-layer beam codebook corresponding to a beamwidth, and beamwidths of respective beam codebook components belonging to the same beam layer of the multi-layer beam codebook according to beamwidth are the same or different.

A directional beamwidth control method according to another embodiment is a directional beamwidth control method in which a reference communication device including an antenna part configured to generate a plurality of directional beams, a transceiver part including at least one transceiver unit (TXRU) configured to supply signal to the antenna part or receive signal from the antenna part, and a control part configured to control the beam generation of the antenna part and to control TXRU assignment of the transceiver part and signal transmission and reception performs communication with a target communication device, the directional beamwidth control method comprising: generating a kinematic quantity parameter according to movement of at least one of the reference communication device and other communication device; generating a directional distance parameter of the reference communication device and the other communication device; generating a direction of a directional beam of the reference communication device; and determining a beamwidth based on the kinematic quantity parameter and the directional distance parameter.

Further, the generating of the directional distance parameter includes determining one of an actual inter-device distance between the reference communication device and the other communication device and an inter-device beam centerline distance obtained by projecting the actual inter-device distance onto the centerline of the directional beam generated from the reference communication device, and generating the parameter based on the determined distance.

Further, the generating of the kinematic quantity parameter includes generating the parameter based on one of a speed, a velocity, and a vertical velocity of the reference communication device, or one of a relative speed between devices, a relative velocity between devices, and a relative vertical velocity between devices of the reference communication device and the other communication device.

Further, the determining of the beamwidth includes, determining the beamwidth to be widened as the kinematic quantity parameter or a magnitude of the kinematic quantity parameter increases and to be narrowed as the kinematic quantity parameter or the magnitude of the kinematic quantity parameter decreases, or determining the beamwidth to be narrowed as the directional distance parameter increases and to be widened as the directional distance parameter decreases.

Further, the determining of the beamwidth includes determining the beamwidth based on a control parameter combination defined by dividing the kinematic quantity parameter or a magnitude of the kinematic quantity parameter by the directional distance parameter.

Further, the determining of the beamwidth includes determining the beamwidth to be widened as the control parameter combination or the magnitude of the control parameter combination increases and to be narrowed as the control parameter combination or the magnitude of the control parameter combination decreases.

According to an embodiment, it is possible to maximize transmission efficiency and quality of service while securing the stability of a communication link and the stability of service by preventing interruption of the communication link and an excessive system load by flexibly controlling a beamwidth of a directional beam in consideration of both a kinematic quantity parameter according to the movement of at least one of a reference communication device and other device and a directional distance parameter between the reference communication device and the other device in a communication system using a directional beam.

Further, according to an embodiment, it is possible to efficiently control the beamwidth while simplifying the implementation of the system, thereby guaranteeing the stability of a communication link and the stability of service and maximizing transmission efficiency and quality of service while satisfying a target dwell time, by utilizing a multi-layer beam codebook according to beamwidth and adopting a beamwidth defined in consideration of both the kinematic quantity parameter according to movement of at least one of the reference communication device and the other device and the directional distance parameter between the reference communication device and the other device, as a control decision variable for beam layer determination of the multi-layer beam codebook according to the beamwidth.

**BRIEF DESCRIPTION OF THE DRAWINGS**

FIG. 1 is a conceptual diagram illustrating a directional distance between a reference communication device and other device.

FIG. 2 is a conceptual diagram illustrating a wireless communication environment between a reference communication device and a target communication device using at least one directional beam.

FIG. 3 is a block diagram illustrating a configuration of a reference communication device according to an embodiment.

FIG. 4 is a block diagram illustrating a configuration of a reference communication device according to another embodiment.

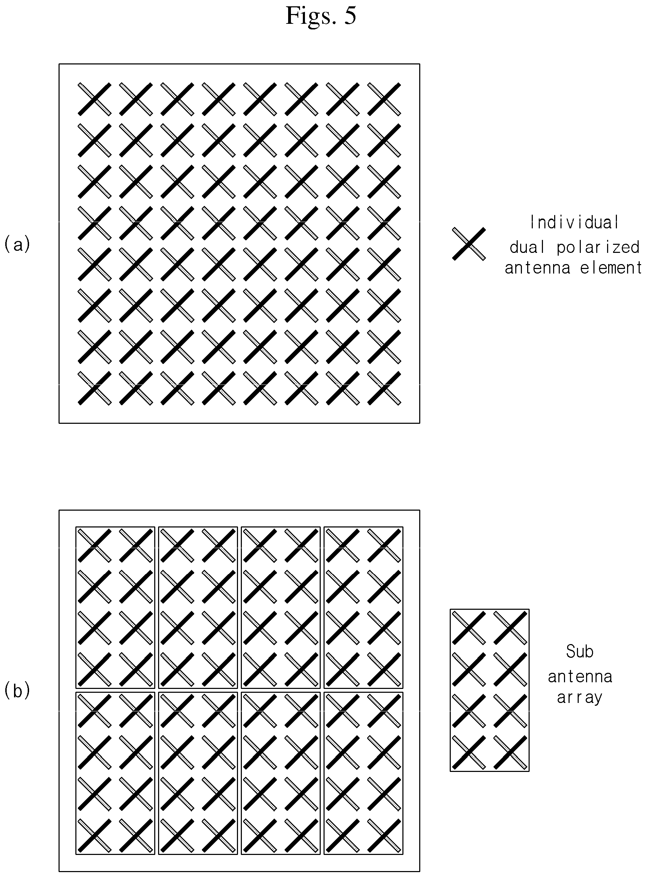

(a) of FIG. 5 illustrates an example of an antenna array configuration, and (b) of FIG. 5 illustrates an example of a configuration including a set of a plurality of antenna arrays.

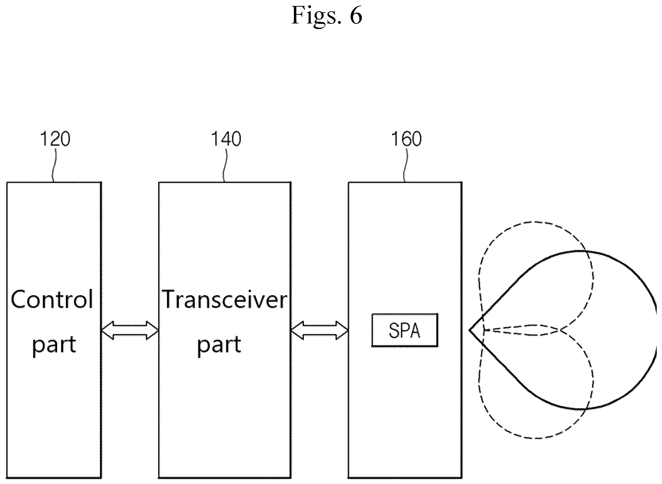

FIG. 6 is a block diagram of a configuration of a reference communication device using a parasitic array structure.

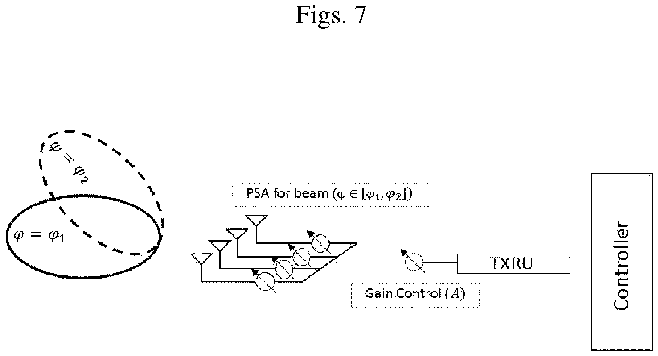

FIG. 7 shows a configuration of a beamwidth control system according to an embodiment.

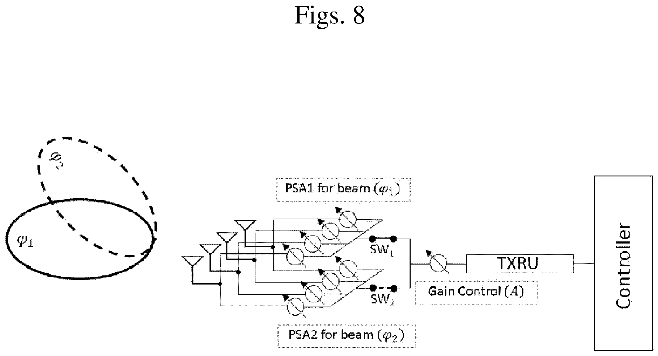

FIG. 8 illustrates a configuration of a beamwidth control system according to another embodiment.

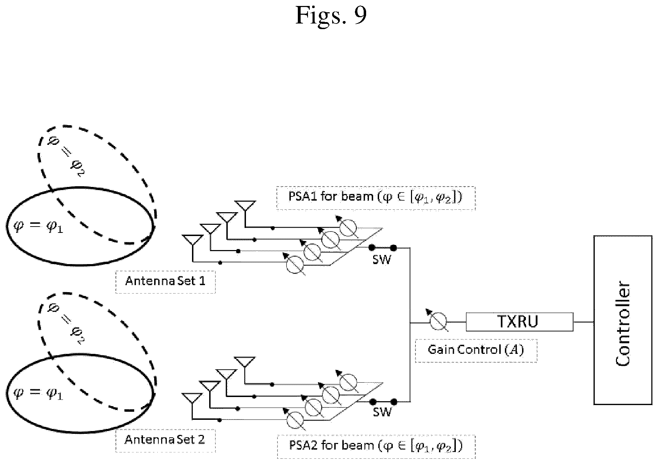

FIG. 9 illustrates a configuration of a beamwidth control system according to yet another embodiment.

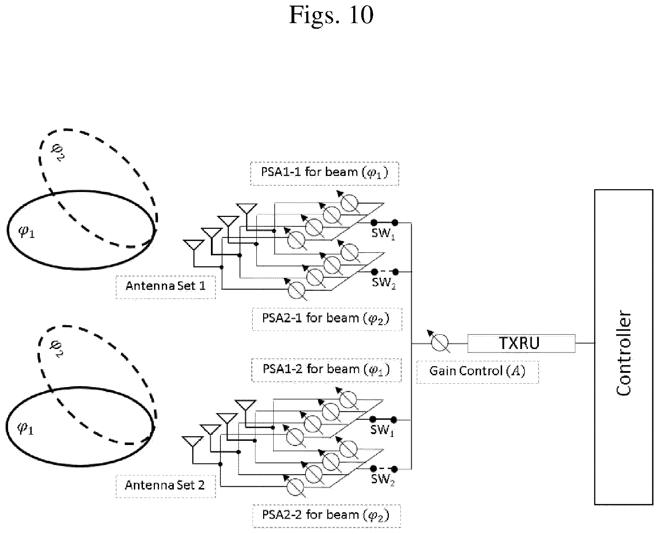

FIG. 10 illustrates a configuration of a beamwidth control system according to yet another embodiment.

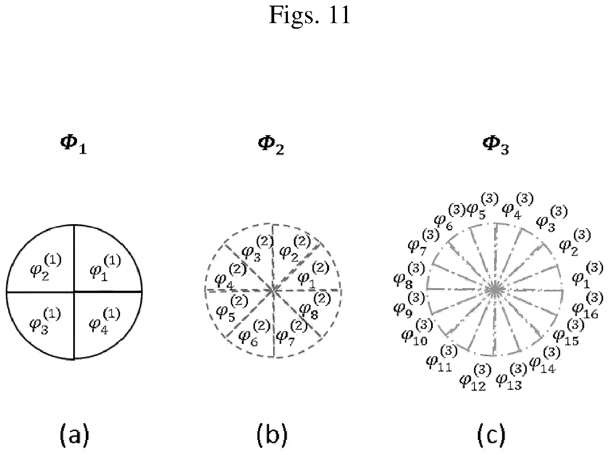

FIG. 11 illustrates a multi-layer beam codebook according to an embodiment.

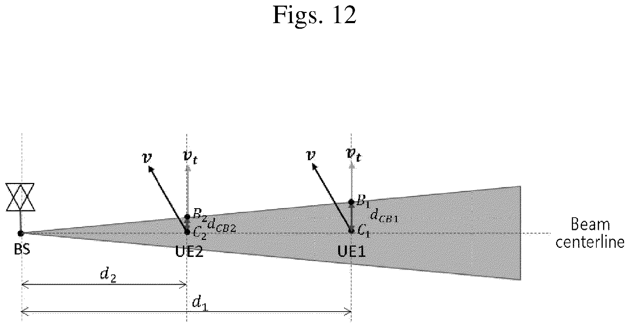

FIG. 12 illustrates directional communication between a reference communication device and other device according to an embodiment.

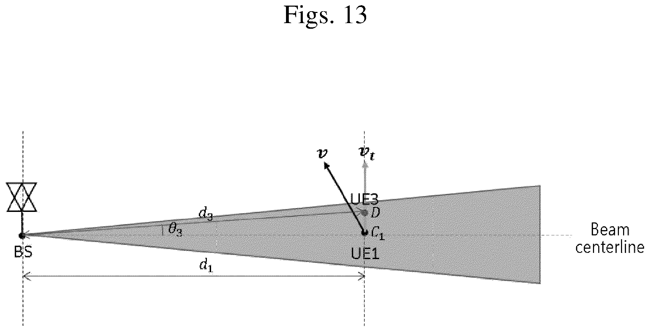

FIG. 13 illustrates directional communication between a reference communication device and other device according to another embodiment.

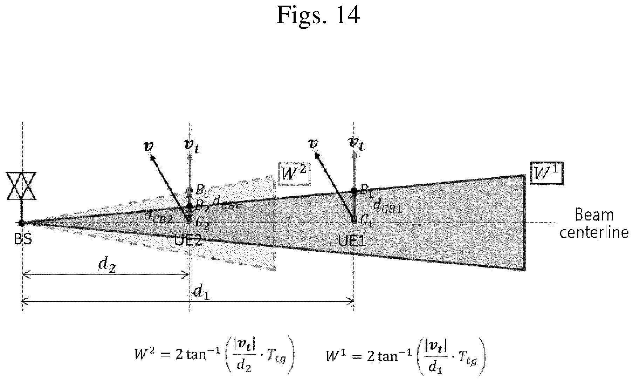

FIG. 14 illustrates beamwidth control between different devices having the same velocity according to an embodiment.

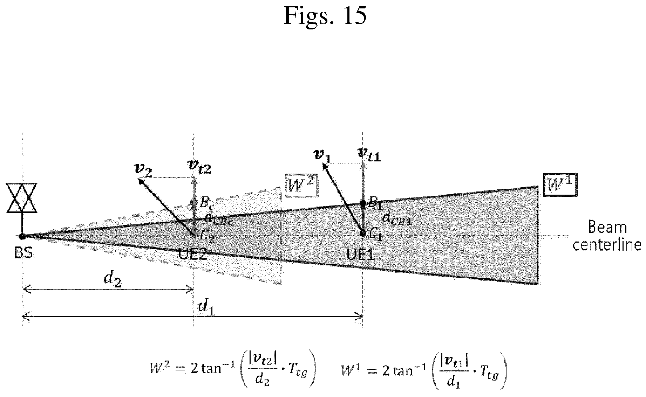

FIG. 15 illustrates beamwidth control between different devices having different velocity according to another embodiment.

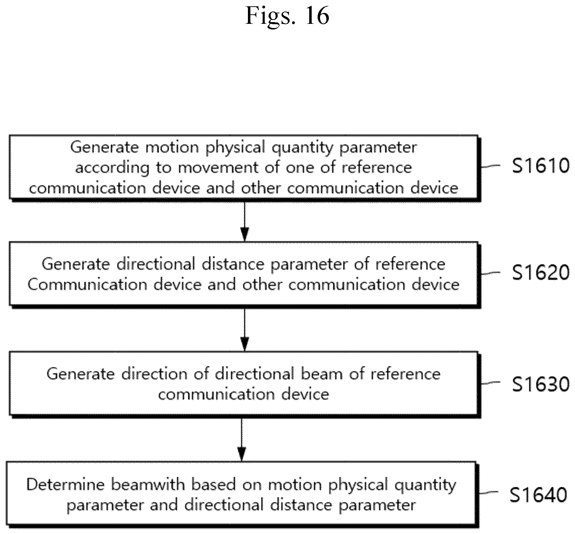

FIG. 16 is a flowchart of a directional beamwidth control method.

## DETAILED DESCRIPTION

When it is judged that specific description of a known technology related to the present disclosure may unnecessarily obscure the gist of present disclosure in describing embodiments of present disclosure, detailed description will be omitted. Terms to be described below are terms defined in consideration of functions in the present disclosure, and may vary depending on the intention or custom of a user or operator. Therefore, the definitions should be made based on the content throughout present disclosure. The terms used in the detailed description are only intended to describe the embodiments of present disclosure, and should be construed in a limiting manner. Unless clearly used otherwise, an expression in a singular form includes a meaning in a plural form. In the present description, expressions such as "including" or "comprising" are intended to indicate certain characteristics, numbers, steps, operations, elements, parts, or combinations thereof, and should not be construed as excluding the presence or possibility of one or more other characteristics, numbers, steps, operations, elements, part thereof, or combinations thereof other than those described.

Terms including ordinal numbers such as "first" and "second" may be used to describe various components, but the components are not limited by the terms. The terms may only be used in a nominal sense to distinguish one component from another component, and an ordering meaning between the components is ascertained through the context of the description rather than such names.

The term "and/or" is used to include all combinations of a plurality of items that are targets. For example, "A and/or B" means all of three cases such as "A", "B", and "A and B".

When a component is referred to as being "coupled" or "connected" to another component, the component may be directly coupled or connected to the other component, but it should be understood that another component may be present in between.

Hereinafter, specific embodiments of the present disclosure will be described with reference to the drawings. The following detailed description is provided to facilitate a comprehensive understanding of methods, devices, and/or articles described herein. However, this is only an example and the present disclosure is not limited thereto.

In a communication system using a directional beam, when at least one of a reference communication device 100 and other device moves, beam switching to another beam in a beam codebook is required due to beam mismatch. In this case, the number of beam switchings per unit time may be determined depending on an angular displacement per unit time of the reference communication device 100. The angular displacement per unit time of the reference communication device 100 is primarily influenced by a kinematic quantity including a relative speed between devices, a relative velocity between devices, and a relative displacement per unit time. Therefore, the number of beam switchings per unit time may be determined based on a magnitude or degree of the kinematic quantity including a distance traveled, a displacement, a speed, or a velocity of the reference communication device 100; or a relative distance traveled between devices, a relative displacement between devices, a relative speed between devices, or a relative velocity between devices, between the reference communication device 100 and the other device. However, even when the magnitude or degree of the kinematic quantity is the same, an influence of the magnitude or degree of the kinematic quantity on the angular displacement per unit time, that is, the number of beam switchings per unit time varies depending on the directional distance between the reference communication device 100 and the other device. For example, as the magnitude or degree of the kinematic quantity, including the relative speed between devices, the relative velocity between devices, and the relative displacement between devices per unit time, increases, the angular displacement per unit time also increases, and therefore, it is obvious that the number of beam switchings per unit time increases. But even when the magnitude or degree of the kinematic quantity remains the same, an influence of the magnitude or degree of the kinematic quantity on the angular displacement per unit time increases as a directional distance between communication devices becomes smaller. In this case, even when the kinematic quantity remains the same, the number of beam switchings per unit time increases as a directional distance between the devices decreases. In conclusion, the directional distance between the devices as well as the kinematic quantity should be considered as factors having an influence on the number of beam switchings per unit time.

Due to such an influence, as a directional distance between the reference communication device 100 and the other device decreases, beam switching within a single beam codebook alone may lead to unmanageable resource loss and service delay due to the increased number of beam switching per unit time resulting from reduced beam switching intervals. Therefore, it is necessary to prevent excessive resource loss and service delay due to the increase in the number of beam switchings per unit time and to reduce the likelihood of communication interruption and service disconnection. As one solution to this issue, setting a beam target dwell time defined as an average dwell time during which the other device should dwell within a current serving beam of the reference communication device, using a multi-layer beam codebook according to beamwidth rather than the single beam codebook, and adjusting the beamwidth through beam layer switching as well as beam switching within the current-layer beam codebook when the beam target dwell time deviates from an allowable range may be considered.

The performance and stability of the communication system using the directional beam may greatly depend on the beamwidth of the directional beam. When the beamwidth decreases, transmission efficiency or throughput performance due to the increase in a directional gain is improved, but when at least one of the reference communication device 100 and the other device moves, the increase in the number of beam switchings per unit time due to beam mismatch may cause resource loss and service delay, and even communication interruption and service disconnection. In particular, the severity of these increases as the directional distance decreases. Therefore, when the beamwidth of the directional beam is determined, not only the magnitude or degree of the kinematic quantity due to the movement of at least one of the reference communication device 100 and the other device, but also the directional distance between the devices should be considered.

Under this background, when at least one of the reference communication device 100 and the other device moves, not only the kinematic quantity due to the movement of the at least one device but also the directional distance between the devices should be considered at the same time in order to maintain the beam target dwell time required by the system and, when the beam target dwell time deviates from a specific range, beam layer switching using the multi-layer beam codebook according to beamwidth through beamwidth adjustment as well as beam switching within the current-layer beam codebook should also be performed in order to secure communication link and service stability, and to maximize transmission efficiency and quality of service.

In order to determine the beam layer of the multi-layer beam codebook according to beamwidth for satisfying the beam target dwell time, the beamwidth of the directional beam may be adopted as a control decision variable. In this case, not only the magnitude or degree of the kinematic quantity due to the movement of the at least one of the reference communication device 100 and the other device but also the directional distance between the devices should be considered at the same time in determining the beamwidth which is the control decision variable. As an example, the beamwidth may be determined to widen (narrow) as the magnitude or degree of at least one kinematic quantity increases (decreases), and to widen (narrow) as the directional distance decreases (increases).

With this scheme, it is possible to prevent communication link interruption and service disconnection, to minimize resource loss and service delay, to guarantee the stability of a communication link and the stability of service, and to maximize communication quality and quality of service. In particular, the beamwidth should widen since the sensitivity of the beamwidth which is a control decision variable, according to the magnitude or degree of the kinematic quantity, increases as the directional distance decreases, but since a communication link budget greatly increases as the directional distance decreases, it is possible to sufficiently overcome performance degradation due to the widened beamwidth even when the beamwidth which is the control decision variable, is maintained wide. Therefore, in the communication system using a directional beam, it is possible to maximize transmission efficiency and quality of service while securing communication stability and service stability by determining the beamwidth of the directional beam, which is a control decision variable, based on simultaneous consideration of the kinematic quantity parameter according to the movement of at least one of the reference communication device 100 and the other device as well as the directional distance parameter between the devices.

The terms used in the present specification are organized as follows, and embodiments will be described in detail with reference to the drawings.

*** Communication Device ***

A communication device is a device that manages a communication connection and controls transmission or reception of information or data with other devices or networks. To this end, the communication device may perform not only the transmission or reception of the information or data, but also conversion of the information or data, signal conversion, data modulation and demodulation, and the like, and may perform functions such as protocol conversion between the other device and the network, routing and switching, connection establishment/maintenance/release between the communication devices or between the communication device and the network, and signal amplification and relay, thereby providing a stable service.

The communication device may include the reference communication device 100, a target communication device 200, and a relay device. The reference communication device 100 is a communication device that implements technology for controlling the beamwidth of the directional beam designed in the present disclosure. The target communication device 200 is a communication device that is a target to and from which the reference communication device 100 transmits and receives data using a beamwidth control technology designed in the present disclosure. The reference communication device 100 or the target communication device 200 may be a base station device or a terminal device.

*** Relay Device ***

The relay device is a device that relays communication between the reference communication device 100 and the target communication device 200. The relay device is a device that receives data or signals, converts or strengthens the data or signals, and transmits the data or signals to the other device or network. To this end, the relay device not only converts or strengthens the received data or signals and transmits the data or signals to the other device or network, but also performs roles of protocol conversion, routing, and switching between the other device and the network, when necessary. Examples of the relay device considered in the present disclosure include a reconfigurable intelligence surface (RIS), a smart repeater, a relay, a holographic beamformer, and a reflector array.

*** Other Device ***

The other device is a device that is involved in directional communication between the reference communication device 100 and the target communication device 200, excluding the reference communication device 100, and may be the target communication device 200 or the relay device.

Further, the other device may include the target communication device 200 and the relay device, and the relay device is a device that relays communication between the reference communication device and the target communication device.

Further, since the other device means a communication device other than the reference communication device 100, the other device may be referred to as other communication device.

*** Direction of Directional Beam ***

The direction of the directional beam is a parameter indicating a direction representing the directional beam for radiating or receiving electromagnetic waves through an antenna. Examples of the direction of the directional beam include a maximum radiation direction of the directional beam, an intermediate direction in a beamwidth section of the directional beam, and other directions representing the directional beam. As the other directions representing the directional beam, a weighted average direction in the beamwidth section of the directional beam, an intermediate direction of a main lobe of an antenna pattern of the directional beam, a connection line direction between the reference communication device 100 and the other device, and the like may be considered.

*** Beamwidth of Directional Beam ***

A beamwidth of the directional beam is a parameter indicating how much energy radiated through the antenna is concentrated around a designated direction. The beamwidth indicates an angular range in which the radiation intensity of the beam is greater than a specific threshold value (which may be designated as a certain portion of a maximum radiation intensity). A half power beam width (HPBW) is most widely used, and is a range between angles at which the radiation power of the beam is half of a maximum value. In other words, the HPBW is an angular range between points at which the beam power decreases to the half of the maximum value on both sides from a direction in which the beam power has the maximum value. As other primary beamwidths, a main lobe beamwidth which is a range between angles occupied by a main lobe of an antenna radiation pattern, and a null-to-null beamwidth may be used, and it is obvious that there may be various other definitions depending on a user or a system.

*** Directional Distance ***

The directional distance represents a distance along a transmission direction between the reference communication device 100 and the other device. In the present disclosure, a distance along the transmission direction between the reference communication device 100 and the other device, with the reference communication device 100 as a starting point is defined as the directional distance. In the present disclosure, two directional distances are considered. One of the directional distances is an actual inter-device distance, which is a Euclidean distance between the reference communication device 100 and the other device, and the other is an inter-device beam centerline distance and is an inter-device distance along a beam centerline of the directional beam starting from the reference communication device 100. Here, the inter-device beam centerline distance is a component obtained by projecting the actual inter-device distance between the reference communication device 100 and the other device onto the beam centerline of the directional beam of the reference communication device 100.

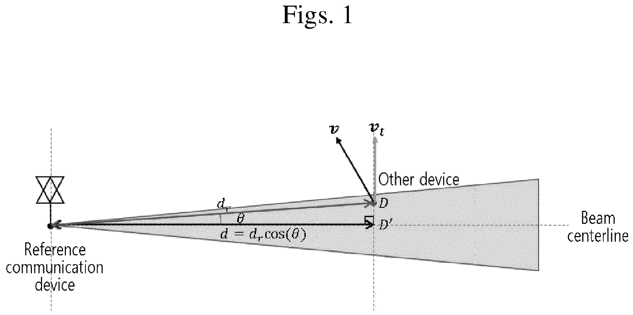

FIG. 1 is a conceptual diagram illustrating a directional distance between the reference communication device 100 and the other device.

Referring to FIG. 1, the other device is located at a point D, which is a service area of the directional beam of the reference communication device 100. In this case, an actual inter-device distance between the reference communication device 100 and the other device is $d_r$, and the inter-device beam centerline distance is a distance from the reference communication device 100 to a point D' projected onto the beam centerline of the directional beam. In other words, the inter-device beam centerline distance corresponds to a cosine component of an angle $\theta$ deviated from the beam centerline with respect to the actual inter-device distance $d_r$. Therefore, referring to FIG. 1, the inter-device beam centerline distance satisfies $d = d_r\cos(\theta)$.

\*\*\* Kinematic quantity \*\*\*

The kinematic quantity is used to describe a motion of an object and to characterize change in the motion. Major kinematic quantities include a time, a position, a distance traveled, a displacement, a speed, a velocity, and an acceleration. When the kinematic quantity needs to be defined between devices, the kinematic quantity may further include a relative time between devices, a relative position between devices, a relative distance traveled between devices, a relative displacement between devices, a relative speed between devices, a relative velocity between devices, and a relative acceleration between devices. Since definitions for the respective kinematic quantities are normally known, detailed descriptions for them thereof will be omitted.

Each of the kinematic quantities is an instantaneous value at a specific point in time or a representative value during a certain period of time. The representative value during the certain period of time is expressed as a single number by aggregating data obtained during a given period of time, and examples of the representative value during the certain period of time include an average, a median, a mode, a maximum, a minimum, a rms (root-mean-square), a geometric mean, a weighted mean, an exponential mean, a center of gravity, and a percentile of values obtained during the certain period of time.

\*\*\* Derived kinematic quantity \*\*\*

A derived kinematic quantity is a physical quantity that is derived from at least one of basic kinematic quantities through combination or conversion. In general, a derived kinematic quantity is a physical quantity that is derived by converting a kinematic quantity, combining at least two kinematic quantities, or converting a combination of at least two quantities.

The derived kinematic quantities considered in the present disclosure include a distance traveled, a displacement, a speed, a velocity, a relative distance traveled between devices, a relative displacement between devices, a relative speed between devices, a relative velocity between devices, a magnitude of a displacement, a magnitude of a velocity, a magnitude of a relative displacement between devices, and a magnitude of a relative velocity between devices. In particular, scalar physical quantities such as the distance traveled, the magnitude of the displacement, the speed, the magnitude of the velocity, the relative distance traveled between devices, the magnitude of the relative displacement between devices, the relative speed between devices, and the magnitude of the relative velocity between devices are derived, or scalar physical quantities corresponding to vector physical quantities are derived.

\*\*\* Conversion of kinematic quantity \*\*\*

Examples of the derived kinematic quantities derived through conversion of the kinematic quantities include a magnitude of the displacement from the displacement, a magnitude of the velocity from the velocity, a magnitude of the relative displacement between devices from the relative displacement between devices, and a magnitude of the relative velocity between devices from the relative velocity between devices. Thus, mainly, vector physical quantities are converted to corresponding scalar physical quantities and then the converted quantities are used as parameters for beamwidth control.

*** Combination and conversion of kinematic quantities ***

The combination of the kinematic quantities may be a combination of a time and a distance traveled or a combination of a relative time between devices and a relative distance traveled between devices, to generate a derived kinematic quantity of one of the speed and the relative speed between devices; a combination of a time and a displacement or a combination of a relative time between devices and a relative displacement between devices, to generate a derived kinematic quantity of one of the velocity and the relative velocity between devices; a combination of a time and a position or a combination of a relative time between devices and a relative position between devices, to generate a derived kinematic quantity of one of the displacement, the speed, the velocity, the relative displacement between devices, the relative speed between devices, and the relative velocity between devices; or a combination of a time and an acceleration or a combination of a relative time between devices and a relative acceleration between devices, to generate a derived kinematic quantities of the velocity, the displacement, the relative velocity between devices, and the relative displacement between devices.

The derived kinematic quantity that is derived by the conversion of a combination of kinematic quantities includes a magnitude of a displacement, a magnitude of a relative displacement between devices, a magnitude of a velocity, and a magnitude of a relative velocity between devices.

*** Kinematic quantity parameter ***

In the present disclosure, the kinematic quantity parameter and the directional distance parameter are simultaneously considered when the beamwidth of the directional beam of the reference communication device 100 is controlled. Here, the kinematic quantity parameter is a parameter for quantifying a physical characteristic according to the movement of at least one of the reference communication device 100 and the other device. Further, the kinematic quantity parameter includes the kinematic quantity and the derived kinematic quantity.

In the present disclosure, the kinematic quantity parameters for controlling the beamwidth of the directional beam of the reference communication device 100 include a time, a position, a distance traveled, a displacement, a speed, a velocity, and an acceleration of the reference communication device 100, and further include a relative time between devices, a relative position between devices, a relative distance traveled between devices, a relative displacement between devices, a relative speed between devices, a relative velocity between devices, and a relative acceleration between devices between the reference communication device 100 and the other device. Further, the kinematic quantity parameter may be an instantaneous value at a specific point in time or a representative value during a certain period of time.

*** Directional distance parameter ***

In the present disclosure, when the beamwidth of the directional beam of the reference communication device 100 is controlled, the kinematic quantity parameters and the directional distance parameters are simultaneously considered. Here, the directional distance parameter is a parameter for quantifying the distance along the transmission direction between the reference communication device 100 and the other device.

In the present disclosure, directional distance parameters for controlling the beamwidth of the directional beam of the reference communication device 100 include an inter-device distance (hereinafter, an actual inter-device distance) between the reference communication device 100 and the other device, and the inter-device beam centerline distance. The inter-device beam centerline distance between the reference communication device 100 and the other device is a distance between the reference communication device 100 and the other device along the beam centerline of the directional beam of the reference communication device 100, and is defined as a component obtained by projecting the actual inter-device distance onto the beam centerline of the directional beam of the reference communication device 100. Further, the directional distance parameter may be an instantaneous value at a specific point in time or a representative value during a certain period of time.

*** Control Parameter Combination ***

In the present disclosure, the kinematic quantity parameter and the directional distance parameter are simultaneously considered when the beamwidth of the directional beam of the reference communication device 100 is determined. Here, the kinematic quantity parameter includes a kinematic quantity parameter and a derived kinematic quantity parameter. In this case, a new control parameter defined by combining the kinematic quantity parameter with the directional distance parameter is called as a control parameter combination.

According to one embodiment, the control parameter combination may be defined by dividing the kinematic quantity parameter or the derived kinematic quantity parameter by the directional distance parameter such as the actual inter-device distance or the inter-device beam centerline distance (i.e., control parameter combination = kinematic quantity parameter divided by directional distance parameter). Specifically, the control parameter combination may be defined by dividing a speed which is the kinematic quantity parameter by an actual inter-device distance which is the directional distance parameter, may be defined by dividing a speed which is the kinematic quantity parameter by an inter-device beam centerline distance which is the directional distance parameter, may be defined by dividing a relative speed between devices which is the kinematic quantity parameter by an actual inter-device distance which is the directional distance parameter, may be defined by dividing a relative speed between devices which is the kinematic quantity parameter by an inter-device beam centerline distance which is the directional distance parameter, may be defined by dividing a magnitude of the velocity which is a magnitude of the kinematic quantity parameter by an actual inter-device distance which is the directional distance parameter, may be defined by dividing a magnitude of the velocity which is a magnitude of the kinematic quantity parameter by an inter-device beam centerline distance which is the directional distance parameter, may be defined by dividing a magnitude of the relative velocity between devices which is a magnitude of the kinematic quantity parameter by an actual inter-device distance which is the directional distance parameter, may be defined by dividing a magnitude of the relative velocity between devices which is a magnitude of the kinematic quantity parameter by an inter-device beam centerline distance which is the directional distance parameter, may be defined by dividing a magnitude of the vertical velocity which is a magnitude of the kinematic quantity parameter by an actual inter-device distance which is the directional distance parameter, may be defined by dividing a magnitude of the vertical velocity which is a magnitude of the kinematic quantity parameter by an inter-device beam centerline distance which is the directional distance parameter, may be defined by dividing a magnitude of the relative vertical velocity between devices which is a magnitude of the kinematic quantity parameter by an actual inter-device distance which is the directional distance parameter, or may be defined by dividing a magnitude of the relative vertical velocity between devices which is a magnitude of the kinematic quantity parameter by an inter-device beam centerline distance which is the directional distance parameter.

*** Control Decision Variable ***

In the present disclosure, a required beamwidth, a beamwidth limit, a desired beamwidth, an optimum beamwidth, a representative value in a beamwidth section, a representative beamwidth value of a beam codebook, a beamwidth estimate, and the like may be used as the control decision variables. The required beamwidth is a beamwidth for satisfying requirements of the reference communication device 100, the beamwidth limit is a minimum beamwidth or a maximum beamwidth allowed by the reference communication device 100, the desired beamwidth is a preferred beamwidth or a desired beamwidth for an operation of the reference communication device 100, the optimal beamwidth is an optimal beamwidth that satisfies the purpose of the reference communication device 100, the representative value in the beamwidth section is a beamwidth that represents a specific beamwidth section, the beamwidth representative value of the beam codebook is a beamwidth representing a specific beam layer of the multi-layer beam codebook according to beamwidth, and the beamwidth estimate is an output of a beamwidth estimator adopted by the reference communication device 100 or a result obtained using a beamwidth estimation method.

In particular, when the multi-layer beam codebook according to beamwidth is used, the determination of the beamwidth of the directional beam includes determining the beam layer of the multi-layer beam codebook. In this case, beamwidths of respective beam codebook components belonging to the same beam layer of the multi-layer beam codebook according to beamwidth may be the same as or different from each other.

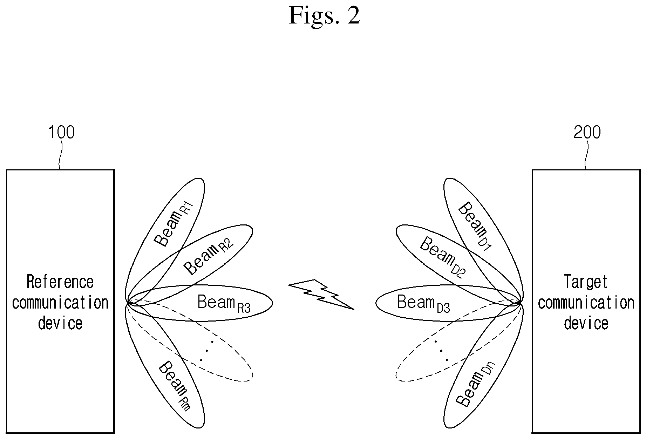

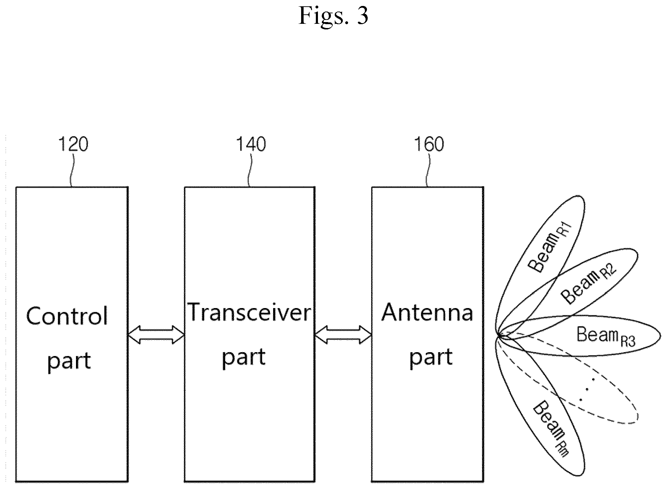

FIG. 2 is a conceptual diagram illustrating a wireless communication environment between the reference communication device 100 and the target communication device 200 using at least one directional beam. FIG. 3 is a block diagram illustrating a configuration of the reference communication device 100 according to an embodiment.

The present disclosure considers a wireless communication environment in which the reference communication device 100 capable of generating the plurality of directional beams transmits (receives) information or signals to (from) the target communication device 200 using the directional beams, as illustrated in FIG. 2. In this case, it is obvious that the target communication device 200 may use the plurality of directional beams or a single beam. The reference communication device 100 includes an antenna part 160 including a beam generation circuit capable of generating a plurality of directional beams, a transceiver part 140 including at least one transceiver unit TXRU that supplies signal to the antenna part 160 or receives signal from the antenna part 160, and a control part 120 that controls system operations including directional beam generation of the antenna part 160, TXRU assignment of the transceiver part 140, and signal transmission and reception, as illustrated in FIG. 3.

*** Antenna Part 160 ***

The antenna part 160 of the reference communication device 100 may be configured of at least one antenna set to generate the plurality of directional beams. Each of the at least one antenna set may have an antenna array 155 structure configured of at least two antenna elements, or a parasitic array structure according to a parasitic array antenna configured of one active element and at least two parasitic elements. Different antenna sets may include at least one mutually exclusive antenna element, or may be configured of different parasitic array antennas.

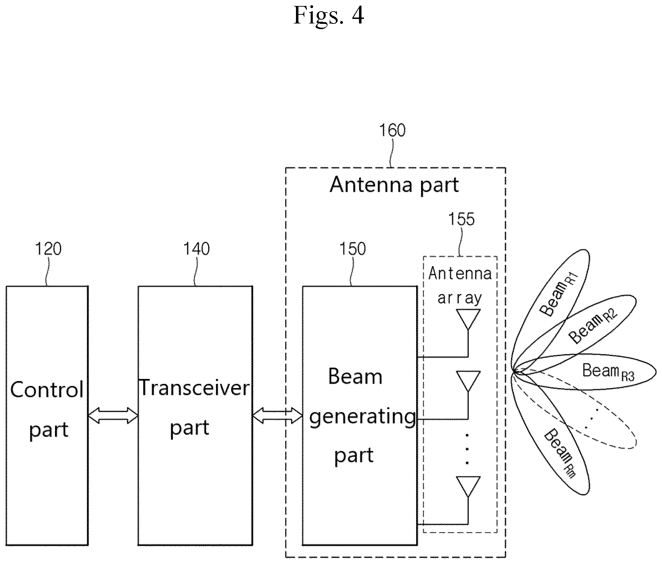

FIG. 4 is a block diagram illustrating a configuration of the reference communication device 100 according to another embodiment. (a) of FIG. 5 shows an example of the antenna array 155 configuration, (b) of FIG. 5 shows an example of a configuration of a set of a plurality of antenna arrays 155. FIG. 6 is a block diagram illustrating a configuration of the reference communication device 100 using a parasitic array structure.

The antenna part 160 of the reference communication device 100 may include the at least one antenna set and a beam generation circuit 150, as illustrated in FIG. 4. The antenna part 160 configured of the at least one antenna set may have a structure of the antenna array 155 in which each antenna set includes at least two antenna elements in order to generate a plurality of directional beams, or have a structure of a parasitic array configured of a parasitic array antenna in which each antenna set includes at least two parasitic elements. As an example, the structure of the antenna array 155 may be configured of a set of antenna arrays 155 or a plurality of sets of antenna arrays 155, as illustrated in (a) and (b) of FIG. 5. In this case, the beam generation circuit 150 may include a phase shifter array PSA configured of a plurality of phase shifters connected to antenna elements constituting the set of antenna arrays 155 and setting phases of the antenna elements, and a gain controller cascaded to the phase shifter array PSA and adjusting a gain for signal supplied to or received from the antenna set, for each set of antenna arrays 155. One or more phase shifter arrays PSA may be included depending on the number of directional beams simultaneously generated by a specific antenna set, a scheme for generating the directional beam, and the like, and may be operated variably. It is obvious that one or more gain controllers may also be included and operated variably.

Meanwhile, for example, a switched parasitic antenna (SPA) and an electronically steerable passive array radiator (ESPAR) configured of one active element and a plurality of parasitic elements (or passive elements) surrounding the active element, may be used as the parasitic array structure. In this case, the beam generation circuit may include a beam generation circuit configured of a beam formation circuit that forms a plurality of beam spaces by adjusting the impedance of each parasitic element or controlling short-circuiting or opening of each parasitic element, and a gain controller for adjusting a gain for signal supplied to or received from an active element cascaded to the beam formation circuit. The SPA (or ESPAR), and the like may adjust the beam pattern by forming a plurality of beam spaces or changing the beam space using one parasitic array antenna. Here, the beam pattern is determined by controlling a beam space shape, a beam space beamwidth, a beam space direction, the number of beam spaces, and the like. Therefore, in the present disclosure, as in FIG. 6, at least one SPA (or ESPAR) may be used to form a plurality of directional beam spaces.

*** Directional Beam Generation of Antenna Set ***

The antenna part 160 can generate the plurality of directional beams. According to one embodiment, the at least one antenna set of the antenna part 160 may generate the plurality of directional beams. According to one embodiment, one antenna set of the antenna part 160 can generate the plurality of directional beams. According to one embodiment, each of the at least two antenna sets of the antenna part 160 may generate at least one directional beam.

According to one embodiment, each of the at least two antenna sets of the antenna part 160 may generate at least one different directional beam. According to one embodiment, both the at least two antenna sets of the antenna part 160 may generate at least one same directional beam.

*** Assignment of TXRU to Antenna Set ***

Further, the at least one antenna set may be assigned to one TXRU. According to one embodiment, the at least two antenna sets may be assigned to one TXRU. According to one embodiment, each antenna set may be assigned to one TXRU.

*** Data Transmission and Reception of Antenna Set ***

At least one antenna set of the antenna part 160 may transmit or receive at least one same information or signal. Both the at least two antenna sets of the antenna part 160 may transmit or receive at least one same information or signal.

Each antenna set of the antenna part 160 may transmit or receive at least one independent piece of information or signal.

FIG. 7 illustrates a configuration of a beamwidth control system according to an embodiment. FIG. 8 illustrates a configuration of a beamwidth control system according to another embodiment. FIG. 9 illustrates a configuration of a beamwidth control system according to yet another embodiment. FIG. 10 illustrates a configuration of a beamwidth control system according to yet another embodiment.

Hereinafter, different structures of a beamwidth control system that generates the plurality of directional beams

**EP 4 564 702 A1**

according to embodiments of the present disclosure will be introduced with reference to FIGS. 7 to 10.

Referring to FIG. 7, it can be seen that one antenna set is formed in the antenna part 160, one phase shifter array PSA of which a phase can be adjusted according to a control operation of the control part 120 is connected to the antenna set, and phases of the phase shifter array are set differently for each directional beam according to the control operation of the control part 120, such that a first directional beam cp 1 or a second directional beam φ2, directed in different directions can be generated. In this case, in an operation of the control part 120 for generating the first directional beam cp 1, the phases of the phase shifter array are set so that a directional beam φ generated through the phase shifter array PSA becomes the first directional beam φ1 (that is, φ = φ1). In the same manner, in an operation of the control part 120 for generating the second directional beam φ2, the phases of the phase shifter array are set so that the directional beam φ generated through the phase shifter array PSA becomes the second directional beam φ2 (that is, φ = φ2). Further, one transceiver unit TXRU of a transceiver part 140 operating according to the control operation of the control part 120 is illustrated, and the phase shifter array PSA is connected to the transceiver unit TXRU through a gain controller. Thus, the antenna part 160 can generate a plurality of directional beams. Thus, the antenna part 160 can generate a plurality of directional beams by setting the phases of the phase shifter array differently for each directional beam using one antenna set according to the control operation of the control part 120. Thus, at least one antenna set of the antenna part 160 can generate the plurality of directional beams.

Referring to FIG. 8, it can be seen that one antenna set is formed in the antenna part 160, two phase shifter arrays (PSAs) are connected to the antenna set, phases of the two phase shifter arrays connected to the antenna set are set differently for each PSA according to a control operation of the control part 120, and one of the two phase shifter arrays is selected through a switch, so that a first directional beam φ1 or a second directional beam φ2, directed in different directions can be generated. In this case, in an operation of the control part 120 for generating the first directional beam φ1, phases of the first phase shifter array PSA1 are set so that the first directional beam φ1 is generated through the first phase shifter array PSA1, SW1 is connected, and SW2 is disconnected. In the same manner, in an operation of the control part 120 for generating the second directional beam φ2, the phases of the second phase shifter array PSA2 are set so that the second directional beam φ2 is generated through the second phase shifter array PSA2, SW2 is connected, and SW1 is disconnected. Further, one transceiver unit TXRU of the transceiver part 140 operating according to the control operation of the control part 120 is illustrated, and one of the first phase shifter array PSA1 set to generate the first directional beam and the second phase shifter array PSA2 set to generate the second directional beam selected through a switch is connected to the transceiver unit TXRU through a gain controller. Thus, the antenna part 160 can generate a plurality of directional beams. Further, thus, the antenna part 160 uses the one antenna set, selects one of a plurality of phase shifter arrays connected to the antenna set and set to generate a plurality of different directional beams, connects the switch so that the selected phase shifter array is connected to the transceiver unit TXRU through the gain controller, and disconnects the other switches according to the control operation of the control part 120, such that the plurality of directional beams can be generated using one antenna set. Further, thus, at least one antenna set of the antenna part 160 can generate the plurality of directional beams. In another embodiment, it is obvious that it is possible to generate two different directional beams simultaneously by simultaneously connecting SW1 and SW2 and simultaneously using the first phase shifter array PSA1 set to generate the first directional beam φ1 and the second phase shifter array PSA2 set to generate the second directional beam φ2 according to the control operation of the control part 120. Thus, the one antenna set can generate a plurality of different directional beams simultaneously. Further, thus, the at least one antenna set can generate a plurality of different directional beams simultaneously.

Referring to FIG. 9, it can be seen that two antenna sets are formed in the antenna part 160, each of the two antenna sets is connected to one phase shifter array of which the phases can be adjusted according to the control operation of the control part 120, the phases of each phase shifter array connected to each of the two antenna sets are set differently for each directional beam according to the control operation of the control part 120, and the two antenna sets are set to generate the same directional beam, such that the two antenna sets can simultaneously generate a first directional beam φ1 or a second directional beam φ2, directed in the same direction. In this case, in an operation of the control part 120 for generating the first directional beam φ1, the phases of the first phase shifter array PSA1 are set so that a directional beam φ generated through the first phase shifter array PSA1 connected to the first antenna set becomes the first directional beam φ1 (that is, φ = φ1), and at the same time, the phases of the second phase shifter array PSA2 are set so that the directional beam φ generated through the second phase shifter array PSA2 connected to the second antenna set also becomes the first directional beam φ1 (that is, φ = φ1). In the same manner, in an operation of the control part 120 for generating the second directional beam φ2, the phases of the first phase shifter array PSA1 are set so that the directional beam φ generated through the first phase shifter array PSA1 connected to the first antenna set becomes the second directional beam φ2 (that is, φ = (p2), and at the same time, the phases of the second phase shifter array PSA2 are set so that the directional beam φ generated through the second phase shifter array PSA2 connected to the second antenna set also becomes the second directional beam φ2 (that is, φ = φ2). Further, one transceiver unit TXRU of a transceiver part 140 operating according to the control operation of the control part 120 is illustrated, and the first phase shifter array PSA1 and the second phase shifter array PSA2 set to generate the same directional beam are connected to the transceiver unit TXRU through a gain controller to share the transceiver unit TXRU. In another embodiment, the transceiver part 140 operating according to the control part 120 may include a first transceiver unit TXRU1, a second transceiver unit TXRU2, a first gain controller A1, and a second gain controller A2, the first phase shifter array PSA1 connected to the first antenna set may be connected to the first transceiver unit TXRU1 through the first gain controller A1, and the second phase shifter array PSA2 connected to the second antenna set may be connected to the second transceiver unit TXRU2 through the second gain controller r A2. Thus, one transceiver unit TXRU may be individually assigned to each antenna set. Thus, the antenna part 160 may generate a plurality of directional beams. Further, thus, the antenna part 160 sets the phases of each phase shifter array connected to each of at least two antenna sets differently for each directional beam according to the control operation of the control part 120, and the at least two antenna sets are set to generate the same directional beam, such that the at least two antenna sets can generate at least one directional beam. Thus, the antenna part 160 sets the phases of each phase shifter array connected to each of the at least two antenna sets independently for each antenna set according to the control operation of the control part 120, so that each of the at least two antenna sets can generate at least one directional beam. Thus, each antenna set can generate a plurality of directional beams. Thus, the at least one antenna set of the antenna part 160 can generate the plurality of directional beams. In another embodiment, it is obvious that two independent directional beams can be simultaneously generated by simultaneously connecting the two illustrated switches SW and independently setting the phases of the first phase shifter array PSA1 connected to the first antenna set and the phases of the second phase shifter array PSA2 connected to the second antenna set according to the control operation of the control part 120. Thus, the at least two antenna sets can simultaneously generate a plurality of independent directional beams. Thus, the at least two antenna sets can simultaneously generate at least one independent directional beam. Further, thus, the at least one antenna set can simultaneously generate a plurality of independent directional beams.

Referring to FIG. 10, it can be seen that two antenna sets are formed in the antenna part 160, two phase shifter arrays (PSAs) are connected to each of the antenna sets, phases of the two phase shifter arrays connected to each antenna set are set differently for each PSA, the two antenna sets are set to generate the same directional beam, and the phase shifter arrays for which the respective antenna sets are set to generate the same directional beam are selected through switches according to the control operation of the control part 120, such that the two antenna sets can generate a first directional beam $\varphi$1 or a second directional beam $\varphi$2, directed in the same direction. In this case, in the operation of the control part 120 for generating the first directional beam $\varphi$1, phases of a (1-1)-th phase shifter array PSA1-1 and phases of a (1-2)-th phase shifter array PSA1-2 are set so that the two antenna sets generate the same first directional beam $\varphi$1 through the (1-1)-th phase shifter array PSA1-1 in the first antenna set and the (1-2)-th phase shifter array PSA1-2 in the second antenna set, SW1 is connected, and SW2 is disconnected. In the same manner, in an operation of the control part 120 for generating the second directional beam $\varphi$2, the phases of the (2-1)-th phase shifter array PSA2-1 and the phases of the (2-2)-th phase shifter array PSA2-2 are set so that the two antenna sets generate the same second directional beam $\varphi$2 through the (2-1)-th phase shifter array PSA2-1 in the first antenna set and the (2-2)-th phase shifter array PSA2-2 in the second antenna set, SW2 is connected, and SW1 is disconnected. Further, one transceiver unit TXRU of a transceiver part 140 operating according to the control operation of the control part 120 is illustrated, and the (1-1)-th phase shifter array PSA1-1 and the (2-1)-th phase shifter array PSA2-1 set to generate the first directional beam are connected to the transceiver unit TXRU through one gain controller to share the transceiver unit TXRU, or the (1-2)-th phase shifter array PSA1-2 and the (2-2)-th phase shifter array PSA2-2 set to generate the second directional beam are connected to the transceiver unit TXRU through one gain controller to share the transceiver unit TXRU. In another embodiment, a transceiver 140 operating according to the control part 120 may include a first transceiver unit TXRU1, a second transceiver unit TXRU2, a first gain controller A1 and a second gain controller A2, and one of the (1-1)-th phase shifter array PSA1-1 and the (1-2)-th phase shifter array PSA1-2 connected to the first antenna set may be selected through switches, and connected to the first transceiver unit TXRU1 through the first gain controller A1, and one of the (2-1)-th phase shifter array PSA2-1 and the (2-2)-th phase shifter array PSA2-2 connected to the second antenna set may be selected through switches and connected to the second transceiver unit TXRU2 through the second gain controller A2. In this case, all of the phase shifter arrays selected through the switches for each antenna set should generate the same directional beam. Thus, one transceiver unit TXRU can be individually assigned to each antenna set. Thus, the antenna part 160 can generate a plurality of directional beams. Thus, the antenna part 160 sets the phases of each of the plurality of phase shifter arrays connected to each of the at least two antenna sets independently for each PSA according to the control operation of the control part 120, sets the at least two antenna sets to generate the same directional beams, selects the phase shifter arrays that generate the same directional beam for each antenna set, connects the switches so that at least two of the selected phase shifter arrays share the transceiver unit TXRU through a gain controller, and disconnects the other switches, so that the at least two antenna sets can generate at least one same directional beam. Thus, the antenna part 160 sets the phases of each of the plurality of phase shifter arrays connected to each of the at least two antenna sets independently for each PSA and each antenna set, selects at least one phase shifter array for each antenna set, connects the switches so that at least two of the selected phase shifter arrays share the transceiver unit TXRU through the gain controller, and disconnects the other switches according to the control operation of the control part 120, so that the at least two antenna sets can each generate at least one directional beam. Thus, each antenna set can generate a plurality of directional beams. Further, thus, the at least one antenna set of the antenna part 160 can generate the plurality of directional beams. In another embodiment, it is obvious that, according to the control operation of the control part 120, the (1-1)-th phase shifter array PSA1-1 and the (2-1)-th phase shifter array PSA2-1 connected to the first antenna set and the (1-2)-th phase shifter array PSA1-2 and the (2-2)-th phase shifter array PSA2-2 connected to the second antenna set can be set independently for each PSA and each antenna set, and the switches are connected in various ways so that directional beams can be generated in various ways. Thus, the antenna part 160 can generate the plurality of directional beams. Thus, the antenna part 160 can generate the plurality of directional beams simultaneously. Thus, each of the at least two antenna sets can generate at least one directional beam. Thus, each of the at least two antenna sets can generate at least one directional beam. Thus, each of the at least two antenna sets can generate at least one directional beam. Thus, the at least two antenna sets can generate at least one same directional beam. Further, thus, the at least one antenna set can generate a plurality of different directional beams. Thus, the at least one antenna set can simultaneously generate a plurality of different directional beams.

*** Multi-layer Beam Codebook according to Beamwidth ***

As described above, in a communication system using a directional beam, a scheme in which at least one beam codebook is prepared in advance and a directional beam within the beam codebook is selected to be most appropriate for a channel situation, rather than generating and using an optimal directional beam adaptively to the channel situation for the purpose of implementation convenience, is adopted.

FIG. 11 is a multi-layer beam codebook according to an embodiment.

The beam codebook may be generated by selecting a set of directional beams that can service a communication area in advance and determining beam generation coefficients for generating directional beams that are elements of the set in advance. In this case, the communication system selects and uses a directional beam within the beam codebook that is most appropriate for the channel situation. As an example, referring to (a) of FIG. 11, when the number of directional beams is 4, the set of directional beams constituting the beam codebook may be expressed as

$$\Phi_1 = [\varphi_1^{(1)}, \varphi_2^{(1)}, \varphi_3^{(1)}, \varphi_4^{(1)}]$$

. Here, $\varphi_i^{(1)}$ represents the directional beam, which is an i-th component of the beam codebook $\Phi_1$. As another example, referring to (b) and (c) of FIG. 11, when the respective numbers of directional beams increase to 8 and 16, sets of directional beams constituting the corresponding beam codebooks can be expressed as

$$\Phi_2 = [\varphi_1^{(2)}, \varphi_2^{(2)}, \varphi_3^{(2)}, \varphi_4^{(2)}, ..., \varphi_7^{(2)}, \varphi_8^{(2)}]$$ and $$\Phi_3 = [\varphi_1^{(3)}, \varphi_2^{(3)}, \varphi_3^{(3)}, \varphi_4^{(3)}, ..., \varphi_{15}^{(3)}, \varphi_{16}^{(3)}]$$, respectively.

When the beamwidth should be adaptively adjusted depending on the channel situation and a communication environment in the communication system using the directional beam, a multi-layer beam codebook with different beamwidths rather than a single beam codebook is prepared and used, thereby maximizing communication quality and quality of service while ensuring communication stability and service stability. As an example, referring to (a) to (c) of FIG. 11, a three-layer beam codebook configured of three layers including a highest beam layer beam codebook $$\Phi_1 = [\varphi_1^{(1)}, \varphi_2^{(1)}, \varphi_3^{(1)}, \varphi_4^{(1)}]$$ having a widest beamwidth and including four directional beams each having a beamwidth of $\frac{\pi}{2}$, an intermediate beam layer beam codebook $$\Phi_2 = [\varphi_1^{(2)}, \varphi_2^{(2)}, \varphi_3^{(2)}, \varphi_4^{(2)}, ..., \varphi_7^{(2)}, \varphi_8^{(2)}]$$ having a middle beamwidth and including eight directional beams each having a beamwidth of $\frac{\pi}{4}$ which is half of the beamwidth of the highest beam layer, and a lowest beam layer beam codebook $$\Phi_3 = [\varphi_1^{(3)}, \varphi_2^{(3)}, \varphi_3^{(3)}, \varphi_4^{(3)}, ..., \varphi_{15}^{(3)}, \varphi_{16}^{(3)}]$$ having a narrowest beamwidth and including 16 directional beams each having a beamwidth of $\frac{\pi}{8}$ may be configured. It is obvious that the number of beam layers can be increased or decreased, and the number of directional beams per beam layer and the beamwidth of each directional beam may be arbitrarily changed for implementation. It is obvious that the beamwidths of the directional beams constituting the corresponding beam codebook per beam layer may also be set to be the same or different from each other.

When the beamwidth is controlled using a multi-layer beam codebook according to beamwidth, the determination of the beamwidth of the directional beam is to determine the beam layer of the multi-layer beam codebook. As an example, in a case where (a) to (c) of FIG. 11 are referred to and communication is currently performed using the beam codebook of the intermediate beam layer, the beam layer should be switched to the highest beam layer, which is the upper beam layer, when the beamwidth needs to be widened. On the other hand, the beam layer should be switched to the lowest beam layer, which is the lower beam layer, when the beamwidth needs to be narrowed. In a case where the highest beam layer beam codebook is currently used, when the beamwidth needs to be further widened, the highest beam layer beam codebook is maintained as it is, since there is no beam codebook with which the beamwidth can be further widened, and similarly, when the beamwidth needs to be further narrowed in the lowest beam layer, the lowest beam layer beam codebook is maintained as it is, since there is no beam codebook with which the beamwidth can be further narrowed.

*** Control Parameters for Beamwidth Control ***

FIG. 12 shows directional communication between the reference communication device 100 and other device according to an embodiment. FIG. 13 shows directional communication between the reference communication device 100 and other device according to another embodiment.

In a communication system including a beam codebook having a plurality of directional beams as components and communicating using the directional beams in the beam codebook, when the other device (including the target communication device 200 and the relay device) performing directional communication with the reference communication device 100 deviates from the beam edge of the current directional beam in use of the reference communication device 100, beam switching to another directional beam in the beam codebook is required. It is obvious that the necessity of the beam switching is entirely caused by the movement of at least one of the reference communication device 100 and the other device. In this case, the number of beam switchings per unit time of the reference communication device 100 due to the movement of at least one of the reference communication device 100 and the other device is proportional to the velocity of the reference communication device 100 or the relative velocity between the reference communication device 100 and the other device. In other words, when the velocity of the reference communication device 100 or the relative velocity between the reference communication device 100 and the other device increases, a time taken to reach the nearest beam edge from the centerline of the directional beam of the reference communication device 100 decreases in inverse proportion to the velocity of the reference communication device 100 or the relative velocity between the reference communication device 100 and the other device, and therefore, the number of beam switchings per unit time of the reference communication device 100 increases in proportion to the velocity of the reference communication device 100 or the relative velocity between the reference communication device 100 and the other device, and conversely, when the velocity of the reference communication device 100 or the relative velocity between the reference communication device 100 and the other device decreases, the number of beam switchings per unit time of the reference communication device 100 also decreases in proportion. Further, when the number of beam switchings per unit time increases, system resource loss grows and system load increases, and in a severe case, the increase in the system load may lead to communication interruption or/and degradation of quality of service.

As one solution for maintaining the number of beam switchings per unit time, which increases in proportion as the velocity of the reference communication device 100 or the relative velocity between the reference communication device 100 and the other device increases, at an appropriate level, a method of maintaining the number of beam switchings per unit time at a desired level by increasing the beamwidth of the directional beam of the reference communication device 100 as the velocity of the reference communication device 100 or the relative velocity between the reference communication device 100 and the other device increases may be considered. On the other hand, when the velocity of the reference communication device 100 or the relative velocity between the reference communication device 100 and the other device decreases, it is possible to maximize the communication quality and quality of service while maintaining the number of beam switchings per unit time at an appropriate level by decreasing the beamwidth of the directional beam of the reference communication device 100. Thus, it is possible to dynamically control the beamwidth of the directional beam of the reference communication device 100 according to the velocity of the reference communication device 100 or the relative velocity between the reference communication device 100 and the other device.

In addition to the velocity of the reference communication device 100 or the relative velocity between the reference communication device 100 and the other device, there is another important factor having an influence on the number of beam switchings per unit time of the reference communication device 100. This is the directional distance between the reference communication device 100 and the other device. When the directional distance between the reference communication device 100 and the other device decreases, a distance from the beam centerline to the nearest beam edge for a given beamwidth of the reference communication device 100 decreases in proportion to the directional distance, and therefore, even when the velocity of the reference communication device 100 or the relative velocity between the reference communication device 100 and the other device remains the same, the number of beam switchings per unit time of the reference communication device 100 increases in inverse proportion to the directional distance between the reference communication device 100 and the other device. On the other hand, when the directional distance between the reference communication device 100 and the other device increases, the distance from the beam centerline to the nearest beam edge for a given beamwidth of the reference communication device 100 increases in proportion to the directional distance, and therefore, even when the velocity of the reference communication device 100 or the relative velocity between the reference communication device 100 and the other device is constant, the number of beam switchings per unit time of the reference communication device 100 decreases in inverse proportion to the directional distance between the reference communication device 100 and the other device.

Therefore, for developing a scheme for maintaining the number of beam switchings per unit time of the reference communication device 100 at an appropriate level, not only the velocity of the reference communication device 100 or the relative velocity between the reference communication device 100 and the other device, but also the directional distance between the reference communication device 100 and the other device should be considered as a control parameter for controlling the beamwidth of the directional beam, in controlling the beamwidth of the directional beam of the reference communication device 100.

*** Number of Beam Switchings Per Unit Time and Beam Average Dwell Time ***

In the communication system utilizing the beam codebook having a plurality of directional beams as components and communicating using the directional beams in the beam codebook, when at least one of the reference communication device 100 and the other device moves, when the other device performing directional communication with the reference communication device 100 deviates from the beam edge of the current directional beam in use of the reference communication device 100, beam switching to another directional beam in the beam codebook of the reference communication device 100 is required. However, when there is no movement of either the reference communication device 100 or the other device, no additional beam switching is required once a communication link is formed by adjusting the directional beam. Therefore, in the following description, only a case where there is movement of at least one of the reference communication device 100 and the other device is considered, unless otherwise specified.

In general, in a communication system performing directional communication, the number of beam switchings per unit time, which is one of major system operational indicators, is influenced by various factors including a beamwidth of the current directional beam in use, a velocity of the reference communication device 100 or a relative velocity between the reference communication device 100 and the other device, a distance between the reference communication device 100 and the other device, an angle formed by the other device relative to a beam centerline of the directional beam of the reference communication device 100, a movement direction, and the like. However, in the present disclosure, controlling the beamwidth of the directional beam of the reference communication device 100 is considered as a solution for maintaining the number of beam switchings per unit time of the reference communication device 100 at an appropriate level. Accordingly, in the embodiment of the present disclosure, a determination of the beamwidth of the directional beam of the reference communication device 100 depending on the speed and the velocity (practically, the magnitude of the velocity) of the reference communication device 100 or the relative velocity between devices of the reference communication device 100 and the other device (practically, the magnitude of the relative speed between devices), and the directional distance between the reference communication device 100 and the other device, which are control parameters having a great influence on the determination of the number of beam switchings per unit time, will be mainly described.

First, for the purpose of development, an initial development is processed, assuming that the velocity of the reference communication device 100 or the relative velocity between devices of the reference communication device 100 and the other device is constant, and then an influence of the velocity of the reference communication device 100 or the relative velocity between devices of the reference communication device 100 and the other device, which is an additional control parameter, will be additionally described. Further, in addition to the velocity of the reference communication device 100 or the relative velocity between devices of the reference communication device 100 and the other device, the speed of the reference communication device 100 or the relative speed between devices of the reference communication device 100 and the other device should be considered, but since the same result can be obtained by simply changing the control parameter for the development of a control scheme, only the velocity of the reference communication device 100 or the relative velocity between devices of the reference communication device 100 and the other device will be described in in the present disclosure.

The number of beam switchings per unit time of the reference communication device 100 is directly influenced by a velocity in a direction perpendicular to the centerline direction of the directional beam of the reference communication device 100 (hereinafter, a vertical velocity) or a relative velocity between devices perpendicular to the centerline direction of the directional beam of the reference communication device 100 (hereinafter, a relative vertical velocity between devices) rather than the velocity of the reference communication device 100 or the relative velocity between devices of the reference communication device 100 and the other device. This is because the vertical velocity or the relative vertical velocity between devices at which movement is performed from a point on the centerline of the directional beam of the reference communication device 100 to the nearest beam edge is a direct component that causes beam switching by moving the other device to the nearest beam edge of the reference communication device 100. Therefore, it can be seen that the number of beam switchings per unit time of the reference communication device 100 is proportional to the vertical velocity or the relative vertical velocity between devices. In other words, when the vertical velocity or the relative vertical velocity between devices increases, a vertical displacement per unit time of the reference communication device 100 or a relative vertical displacement between devices of the reference communication device 100 and the other device increases in proportion to the vertical velocity or the relative vertical velocity between devices, and therefore, the number of beam switchings per unit time increases in proportion to the vertical velocity or the relative vertical velocity between devices.

For the following development, a time taken for the other device to reach the nearest beam edge point from one point on the beam centerline of the reference communication device 100 according to the vertical velocity or the relative vertical velocity between devices is defined as an average beam dwell time during which the other device dwells within the current beam in use. In other words, the average beam dwell time corresponds to a time during which a terminal device located at one point on the beam centerline can normally maintain communication using the current directional beam in use of the reference communication device 100 without performing beam switching, when the vertical velocity or the relative vertical velocity between devices from the one point on the beam centerline of the reference communication device 100 is given. As an embodiment, referring to FIG. 12, it is assumed that the reference communication device 100 is a base station device, the target communication device 200 is a terminal device, the base station BS, which is the reference communication device 100, is fixed at a position, the terminal device (UE), which is the other device, moves at a constant relative velocity $\vec{v}$, and a relative vertical velocity between devices with respect to the reference communication device 100 is assumed to be $\vec{v_t}$. In this case, when terminal device 1 UE1 is located at a point $C_1$ on the beam centerline of the base station directional beam and moves at the relative vertical velocity between devices $\vec{v_t}$ to a point Bi, which is a beam edge of the base station directional beam, a time taken to reach from the point $C_1$ to the point $B_1$ is $d_{CB1}/|\vec{v_t}|$. In other words, the average beam dwell time of terminal device 1 UE1 is $d_{CB1}/|\vec{v_t}|$. As another embodiment, referring to FIG. 12, in this case, when terminal device 2 UE2 is located at a point $C_2$ on the beam centerline of the base station directional beam and moves at the relative vertical velocity between devices $\vec{v_t}$ to a point $B_2$, which is the beam edge of the base station directional beam, a time taken to reach from the point $C_2$ to the point $B_2$ is $d_{CB2}/|\vec{v_t}|$. In other words, the average beam dwell time of terminal device 2 UE2 is $d_{CB2}/|\vec{v_t}|$. (In the following description, $v_t = |\vec{v_t}|$ for the convenience of expression.) Therefore, it can be seen that, when the relative vertical velocity between devices $\vec{v_t}$ is constant, a minimum time taken for movement from one point on the beam centerline of the base station directional beam to the nearest beam edge, that is, the average beam dwell time, is inversely proportional to the relative vertical velocity between devices $\vec{v_t}$ or the magnitude $v_t = |\vec{v_t}|$ of the relative vertical velocity between devices.

Similarly, it can be seen that the number of beam switchings per unit time of the reference communication device 100 is inversely proportional to the average beam dwell time. In other words, when the average beam dwell time becomes short due to a large magnitude $v_t$ of the relative vertical velocity between devices, the number of beam switchings per unit time of the reference communication device 100 increases in inverse proportion to the average beam dwell time, and conversely, when the average beam dwell time becomes long due to a small magnitude of the relative vertical velocity between devices, the number of beam switchings per unit time of the reference communication device 100 decreases in inverse proportion to the average beam dwell time. Therefore, according to the embodiment with reference to FIG. 12, since the number of beam switchings per unit time of the reference communication device 100 is inversely proportional to the average beam dwell time, and the average beam dwell time is inversely proportional to the magnitude $v_t = |\vec{v_t}|$ of the relative vertical velocity between devices, it can be seen that the number of beam switchings per unit time of the reference communication device 100 is proportional to the magnitude $v_t = |\vec{v_t}|$ of the relative vertical velocity between devices.

*** Comparison of Actual Inter-device Distance with Inter-device Beam Centerline Distance ***

When the other device deviates from the beam centerline of the directional beam of the reference communication device 100, the inter-device beam centerline distance between the reference communication device 100 and the other device corresponds to a value obtained by multiplying the actual inter-device distance between the reference communication device 100 and the other device by a cosine of a deviation angle from the beam centerline of the directional beam of the reference communication device 100. However, since it is not easy to obtain information on the angle at which the other device deviates from the beam centerline of the directional beam of the reference communication device 100 in an actual communication environment, the actual inter-device distance between the reference communication device 100 and the other device may be used instead of the inter-device beam centerline distance. As an embodiment, referring to FIG. 13, when terminal device 1 UE1 as the other device is located at a point $C_1$ on the beam centerline of the directional beam of the base station BS, which is the reference communication device 100, the inter-device beam centerline distance is $d_1$. When the terminal device UE3 as the other device is located at a point D deviating from the beam centerline of the directional beam of the base station by the deviation angle $\theta_3$, and the actual inter-device distance between the base station and the terminal device is $d_3$, the inter-device beam centerline distance is $d_3\cos(\theta_3)$ corresponding to a product of the actual inter-device distance and the cosine of the deviation angle from the centerline, and in the example of FIG. 13, the inter-device beam centerline distance satisfies $d_3 \cos(\theta_3) = d_1$. However, since it is not easy to obtain information on the deviation angle ($\theta_3$ in FIG. 13) from the centerline of the directional beam of the reference communication device 100, an actual inter-device distance $d_3$ may be used instead of the inter-device beam centerline distance $d_1$ in an actual application. It can be seen that an error between the actual inter-device distance and the inter-device beam centerline distance is not large when a lower-layer beam codebook for an intermediate beam layer or the lowest beam layer other than the highest beam layer codebook is used as illustrated in FIG. 11, as one embodiment. When the beamwidth of the directional beam of the next-highest beam layer (corresponding to the intermediate beam layer of FIG. 11) following the highest beam layer is $\dfrac{\pi}{4}$, a maximum error between the actual inter-device distance and the inter-device beam centerline distance is $1 - \cos\left(\dfrac{\pi}{8}\right) \cong 0.076$ (7.6%), which may be at an allowable level. When the beamwidth of the directional beam is smaller than or equal to this (that is, $\dfrac{\pi}{4}$), it can be concluded that there is no significant problem in replacing the inter-device beam centerline distance with the actual inter-device distance.

*** Beam Average Dwell Time According to Beamwidth ***

As illustrated in FIG. 12, when an inter-device beam centerline distance from the base station, which is a distance from the reference communication device 100 to one point $C_1$ on the beam centerline of the base station directional beam is defined as $d_1$, an inter-device beam centerline distance from the base station device to another point $C_2$ on the beam centerline of the base station directional beam is defined as $d_2$, and the beamwidth of the current directional beam in use of the base station is assumed to be W, respective minimum distances $D_{CB1}$ and $d_{CB2}$ from the base station beam centerline to respective nearest base station beam edges are given as follows.

[Formula 1]

$$d_{CB1} = d_1 \tan\left(\frac{W}{2}\right)$$

[Formula 2]

$$d_{CB2} = d_2 \tan\left(\frac{W}{2}\right)$$

Therefore, it can be seen that, when the beamwidth of the base station directional beam is given by W, a distance from the base station beam centerline to the nearest beam edge is proportional to an inter-device beam centerline distance from the base station device to the terminal device. Therefore, it can be seen that, when a velocity of the terminal device or a relative velocity between the base station device and the terminal device is the same, an average beam dwell time of the terminal device is proportional to the inter-device beam centerline distance from the base station device to the terminal device. In other words, a minimum time it takes for the other device to move from the beam centerline of the directional beam of the reference communication device 100 to the nearest beam edge, that is, the average beam dwell time is proportional to the inter-device beam centerline distance between the reference communication device 100 and the other device.

When the relative vertical velocity between devices is $\vec{v}_t$, the inter-device beam centerline distance is d, and the beamwidth of the directional beam of the reference communication device 100 is W as described above, an average beam dwell time $T_{dw}$ can be expressed by the following formula as

[Formula 3]

$$T_{dw} = \frac{d}{v_t} \tan\left(\frac{1}{2}W\right)$$

Here, since the relative vertical velocity between devices $\vec{v_t}$ is a vector quantity, it can be noted that a magnitude $v_t = |\vec{v_t}|$ of the relative vertical velocity between devices, that is a corresponding scalar quantity is used. However, when it is difficult to obtain information on the inter-device beam centerline distance, the inter-device beam centerline distance d may be replaced with an actual inter-device distance $d_r$. As an embodiment, referring to FIG. 13, when the terminal device is located at the point D, the inter-device beam centerline distance is d = $d_1$, but the actual inter-device distance is $d_r = d_3$. In this case, when the actual inter-device distance is used instead of the inter-device beam centerline distance, the average beam dwell time $T_{dw}$ can be calculated as follows.

[Formula 4]

$$T_{dw} \approx \frac{d_r}{v_t} \tan\left(\frac{1}{2} W\right)$$

In this case, since the actual inter-device distance $d_r$ is greater than or equal to the inter-device beam centerline distance d, the average beam dwell time calculated according to [Formula 4] is slightly greater than or equal to the exact average beam dwell time according to [Formula 3].

*** Target Dwell Time and Target Beamwidth ***

In order to control a system load that increases as the number of beam switchings per unit time increases, the number of beam switchings per unit time should be managed at an appropriate level. To this end, in the present disclosure, a target dwell time $T_{tg}$ for the average beam dwell time $T_{dw}$ which is directly related to the number of beam switchings per unit time is set, and as a scheme for satisfying the target dwell time $T_{tg}$, the beamwidth of the directional beam of the reference communication device 100 is controlled in consideration of both the vertical velocity or the relative vertical velocity between devices, and the inter-device beam centerline distance. When the target dwell time is $T_{tg}$, the relative vertical velocity between devices is $\vec{v_t}$, and the inter-device beam centerline distance is d, the beamwidth $W_{tg}$ (hereinafter referred to as the target beamwidth) of the directional beam of the reference communication device 100 satisfying the target dwell time $T_{tg}$ can be expressed as follows.

[Formula 5]

$$W_{tg} = 2\tan^{-1}\left(\frac{v_t}{d} \cdot T_{tg}\right)$$

Therefore, it can be seen that, when $T_{tg}$ is given, the target beamwidth $W_{tg}$ of the directional beam of the reference communication device 100 satisfying $T_{tg}$ should be determined based on the vertical velocity or the relative vertical velocity between devices $\vec{v_t}$, and the inter-device beam centerline distance d. In practice, it can be further seen that the target beamwidth should be determined based on the magnitude of the vertical velocity or the magnitude of the relative vertical velocity $v_t$, and the inter-device beam centerline distance d.

However, in order to determine the relative vertical velocity between devices itself, it is necessary to secure information on the movement direction of at least one device, that is, the relative movement direction of the terminal device with respect to the base station. It is also not easy to secure the information on the relative movement direction, and when the movement direction changes abruptly, it is a very difficult process to track the movement direction, and therefore, instead of the vertical velocity or the relative vertical velocity between devices $\vec{v_t}$, the magnitude of the vertical velocity or the magnitude of the relative vertical velocity between devices is replaced with the magnitude of the velocity or the speed, the magnitude of the relative velocity between devices or the relative speed between devices, so that this can be reflected in the calculation of the target beamwidth for satisfying the target dwell time. Therefore, when the velocity of the base station, which is the reference communication device 100, or the relative velocity between the base station and the terminal device is $\vec{v}$, the following formula can be obtained.

[Formula 6]

$$W_{tg} \approx 2\tan^{-1}\left(\frac{|\vec{v}|}{d} \cdot T_{tg}\right) = 2\tan^{-1}\left(\frac{v}{d} \cdot T_{tg}\right)$$

$$v = |\vec{v}|$$

Here, represents the magnitude of the velocity or the magnitude of the relative velocity between devices, or the speed. In this case, since the relative velocity between devices $\vec{v}$ is greater than or equal to the relative vertical velocity between devices $\vec{v}_{tt}$, the target beamwidth calculated according to [Formula 6] is slightly greater than or equal to the exact target beamwidth according to [Formula 5]. However, since in a worst situation, the vertical velocity or the relative vertical velocity between devices may be equal to the velocity or the relative velocity between devices, respectively, there is also a need to maintain the beamwidth of the directional beam somewhat larger than an optimal value unless a moving direction is kept constant.

*** Embodiment of Beamwidth Control of Directional Beam According to Kinematic quantity parameter and Directional Distance Parameter ***

FIG. 14 illustrates beamwidth control between different devices having the same velocity according to an embodiment. FIG. 15 illustrates beamwidth control between different devices having different velocity according to another embodiment.

An embodiment in which the beamwidth of the directional beam of the reference communication device 100 is controlled based on the kinematic quantity parameter and the directional distance parameter designed in the present disclosure will be described with reference to FIGS. 14 and 15.

Referring to FIG. 14, the reference communication device 100 is a base station BS, the other device is a terminal device (UE), the base station BS, which is the reference communication device 100, is fixed at a position, and two other devices, terminal device 1 UE1 and terminal device 2 UE2, are each moving at the same velocity $\vec{v}$ and have the same relative vertical velocity between devices $\vec{v}_t$ relative to the base station. First, a first case where the base station BS forms a directional beam with a beamwidth of $W^1$ in a beam centerline direction and communicates with terminal device 1 UE1 located at the point $C_1$ separated by the beam centerline distance $d_1$ from the base station along the beam centerline is considered. In this case, a time taken for terminal device 1 UE1 located at the point $C_1$ to reach the nearest beam edge point $B_1$ of the current directional beam in use of the base station without beam switching is $d_{CB1}/|\vec{v}_t|$. In other words, when the beamwidth of the directional beam of the base station is $W^1$, the average beam dwell time of terminal device 1 UE1 located at the point $C_1$ is $T_{dw1} = d_{CB1}/|\vec{v}_t|$. Next, a second case where the base station BS similarly forms a directional beam with a beamwidth of $W^1$ in a beam centerline direction and communicates with terminal device 2 UE2 located at the point $C_2$ separated by the inter-device centerline distance $d_2$ from the base station along the beam centerline is considered. In this case, a time taken for terminal device 2 UE2 located at the point $C_2$ to reach the nearest beam edge point $B_2$ of the current directional beam in use of the base station without beam switching is $d_{CB2}/|\vec{v}_t|$. In other words, when the beamwidth of the directional beam of the base station is $W^1$ as in the first case, the average beam dwell time of terminal device 2 UE2 located at the point $C_2$ is $T_{dw2} = d_{CB2}/|\vec{v}_t|$. As in FIG. 14, when the inter-device beam centerline distance between the base station BS and terminal device 1 UE1 is $d_1$ and the inter-device beam centerline distance between the base station BS and terminal device 2 UE2 is $d_2$, $d_1:d_2 = d_{CB1}:d_{CB2}$ is satisfied, and therefore, the average beam dwell time $T_{dw2}$ of terminal device 2 UE2 is decreased by $\frac{d_2}{d_1}$. times of the average beam dwell time $T_{dw1}$ of terminal device 1 UE1. Therefore, the following relationship is satisfied.

[Formula 7]

$$T_{dw2} = \frac{d_2}{d_1} T_{dw1}$$

Therefore, when the relative velocity between devices $\vec{v}$ is the same, the beamwidth of the directional beam of the base station should be increased in the case of terminal device 2 UE2 located at the point $C_2$ where the inter-device beam centerline distance is small, compared to terminal device 1 UE1 located at the point $C_1$ in order for the terminal devices located at the point $C_1$ and the point $C_2$ to maintain the same average beam dwell time. Referring to FIG. 14, when the relative velocity between devices $\vec{v}$ is the same, $d_{CBc} = d_{CB1}$ (i.e., $T_{dwc} = T_{dw1}$) should be satisfied in order for the terminal devices located at the point $C_1$ and the point $C_2$ to have the same average beam dwell time through beamwidth adjustment $W^1 \rightarrow W^2$ of the directional beam of the base station BS. In other words, the following should be satisfied.

[Formula 8]

$$T_{dw1} = \frac{d_1}{|\vec{v}_t|}\tan\left(\frac{1}{2}W^1\right) = T_{dwc} = \frac{d_2}{|\vec{v}_t|}\tan\left(\frac{1}{2}W^2\right)$$

Therefore, the following relationship can be obtained.

[Formula 9]

$$d_1 \tan\left(\frac{1}{2}W^1\right) = d_2 \tan\left(\frac{1}{2}W^2\right)$$

Therefore, in order for the terminal devices located at the point $C_1$ and the point $C_2$ to maintain the same average beam dwell time, the following beamwidth adjustment $W^1 \rightarrow W^2$ should be performed on terminal device 2 UE2 located at the point $C_2$.

[Formula 10]

$$W^2 = 2\tan^{-1}\left(\frac{d_1}{d_2}\tan\left(\frac{1}{2}W^1\right)\right), (-\pi \leq W^1, W^2 < \pi)$$

*** Embodiment: Different Velocity ***

Referring to FIG. 15, the reference communication device 100 is a base station BS, the other device is a terminal device UE, the base station BS, which is the reference communication device 100, is fixed at a position, and the two other devices including terminal device 1 UE1 and terminal device 2 UE2 are moving at relative velocities $\vec{v}_1$ and $\vec{v}_2$ respectively and have relative vertical velocities of devices $\vec{v}_{t1}$ and $\vec{v}_{t2}$ relative to the base station. First, a first case where the base station BS forms a directional beam with a beamwidth of $W^1$ in a direction of a beam centerline and communicates with terminal device 1 UE1 located at a point $C_1$ separated by an inter-device beam centerline distance $d_1$ from the base station along the beam centerline is considered. In this case, a time taken for terminal device 1 UE1 located at the point $C_1$ to reach the nearest beam edge point $B_1$ of the current directional beam in use of the base station without beam switching is $d_{CB1}/|\vec{v}_{t1}|$. In other words, when the beamwidth of the directional beam of the base station is $W^1$, the average beam dwell time of terminal device 1 UE1 located at the point $C_1$ is $T_{dw1} = d_{CB1}/|\vec{v}_{t1}|$. Next, a second case where the base station BS similarly forms a directional beam with a beamwidth of $W^2$ in a direction of a beam centerline and communicates with terminal device 2 UE2 located at a point $C_2$ separated by an inter-device beam centerline distance $d_2$ from the base station along the beam centerline is considered. In this case, a time taken for terminal device 2 UE2 located at the point $C_2$ to reach the nearest beam edge point $B_c$ of the current directional beam in use of the base station without beam switching is $d_{CBc}/|\vec{v}_{t2}|$. In other words, when the beamwidth of the directional beam of the base station is $W^2$, the average beam dwell time of terminal device 2 UE2 located at the point $C_2$ is $T_{dw2} = d_{CBc}/|\vec{v}_{t2}|$. As in FIG. 15, a case where the inter-device beam centerline distance between the base station BS and terminal device 1 UE1 is di, the relative vertical velocity between devices in a direction perpendicular to the beam direction is $\vec{v}_{t1}$, the inter-device beam centerline distance between the base station BS and terminal device 2 UE2 is $d_2$, and the relative vertical velocity between devices in the direction perpendicular to the beam direction is $\vec{v}_{t2}$ is considered. In this case, in order for the terminal devices located at the point $C_1$ and the point $C_2$ to maintain the same average beam dwell time, the beamwidth of the directional beam of the base station should be adjusted for terminal device 2 UE2 located at the point $C_2$ where the inter-device beam centerline distance is small compared to terminal device 1 UE1 located at the point $C_1$. In this case, the adjustment of the beamwidth $W^2$ of the directional beam of the base station for terminal device 2 UE2 located at the point $C_2$ is performed by putting together the beamwidth $W^1$ of the directional beam of the base station BS for communication with terminal device 1 UE1, the inter-device beam centerline distance $d_1$ between the base station BS and terminal device 1 UE1, and the inter-device beam centerline distance $d_2$ between the base station BS and terminal device 2 UE2, as well as the magnitude of the relative vertical velocity between devices between the base station BS, $|\vec{v}_{t1}|$ and terminal device 1 UE1 and the magnitude of the relative vertical velocity between devices between the base station BS and terminal device 2 UE2, $|\vec{v}_{t2}|$.

In order for the terminal devices located at the point $C_1$ and the point $C_2$ to maintain the same average beam dwell time, the respective average beam dwell times should be the same. Therefore, the following should be satisfied.

[Formula 11]

$$T_{dw1} = \frac{d_1}{|\vec{v}_{t1}|}\tan\left(\frac{1}{2}W^1\right) = T_{dwc} = \frac{d_2}{|\vec{v}_{t2}|}\tan\left(\frac{1}{2}W^2\right)$$

Therefore, the following relationship can be obtained.

[Formula 12]

$$\frac{d_1}{|\vec{v}_{t1}|}\tan\left(\frac{1}{2}W^1\right) = \frac{d_2}{|\vec{v}_{t2}|}\tan\left(\frac{1}{2}W^2\right)$$

Therefore, in order for terminal devices located at the point $C_1$ and the point $C_2$ to maintain the same average beam dwell time, the following beamwidth adjustment $W^1 \to W^2$ should be performed on terminal device 2 UE2 located at the point $C_2$.

[Formula 13]

$$W^2 = 2\tan^{-1}\left(\frac{d_1}{d_2}\cdot\frac{|\vec{v}_{t2}|}{|\vec{v}_{t1}|}\cdot\tan\left(\frac{1}{2}W^1\right)\right), (-\pi \leq W^1, W^2 < \pi)$$

When the target dwell time $T_{tg}$ is set and the beamwidth of the base station directional beam is adjusted so that the target dwell time is satisfied in order for the system to manage the number of beam switchings per unit time at an appropriate level, the beamwidth adjustment should be performed so that the following relationship is satisfied.

[Formula 14]

$$\frac{d_1}{|\vec{v}_{t1}|}\tan\left(\frac{1}{2}W^1\right) = \frac{d_2}{|\vec{v}_{t2}|}\tan\left(\frac{1}{2}W^2\right) = T_{tg}$$

Therefore, the beamwidths $W^1$ and $W^2$ of the respective directional beams for terminal device 1 UE1 with the inter-device beam centerline distance of $d_1$ and the relative vertical velocity between devices of $\vec{v}_{t1}$ and terminal device 2 UE2 with the inter-device beam centerline distance of $d_2$ and the relative vertical velocity of , which satisfy the target dwell time $T_{tg}$, are determined as follows.

[Formula 15]

$$W^1 = 2\tan^{-1}\left(\frac{|\vec{v}_{t1}|}{d_1}\cdot T_{tg}\right), (-\pi \leq W^1 < \pi)$$

[Formula 16]

$$W^2 = 2\tan^{-1}\left(\frac{|\vec{v}_{t2}|}{d_2}\cdot T_{tg}\right), (-\pi \leq W^2 < \pi)$$

*** General Formula for Beamwidth Control Satisfying Target Dwell Time ***

In conclusion, in general, when the base station BS communicates with the terminal device (UE) of which the inter-device beam centerline distance from the base station is d and the relative vertical velocity between devices perpendicular to the beam centerline direction is $\vec{v}_t$, the beamwidth $W_{tg}$ of the base station directional beam that can satisfy the target dwell time $T_{tg}$ of the system is determined as follows.

[Formula 17]

$$W_{tg} = 2\tan^{-1}\left(\frac{|\vec{v}_t|}{d}\cdot T_{tg}\right), (-\pi \leq W_{tg} < \pi)$$

Thus, the beamwidth of the directional beam may be determined based on the kinematic quantity parameter and the directional distance parameter. The kinematic quantity parameter may include a derived kinematic quantity parameter, and these two will be hereinafter referred to as a kinematic quantity parameter.

When the beamwidth of the directional beam is determined based on the kinematic quantity parameter and the directional distance parameter, the beamwidth may be determined to widen as the kinematic quantity parameter or a magnitude of the kinematic quantity parameter increases, to narrow as the kinematic quantity parameter or the magnitude of the kinematic quantity parameter decreases, to narrow as the directional distance parameter increases, and to widen as the directional distance parameter decreases.

When the beamwidth of the directional beam is determined based on the kinematic quantity parameter and the directional distance parameter, the kinematic quantity parameter may include a speed or a relative speed between devices, a velocity or a relative velocity between devices, a magnitude of the velocity or a magnitude of the relative velocity between devices, a vertical velocity or a relative vertical velocity between devices, and a magnitude of the vertical velocity or a magnitude of the relative vertical velocity between devices. In addition, it is obvious that the kinematic quantity parameter may further include a displacement or a relative displacement between devices, a magnitude of the displacement or a magnitude of the relative displacement between devices, a vertical displacement or a relative vertical displacement between devices, and a magnitude of the vertical displacement or a magnitude of the relative vertical displacement between devices. The directional distance parameter may include the actual inter-device distance and the inter-device beam centerline distance.

Preferably, when the beamwidth of the directional beam is determined based on the kinematic quantity parameter and the directional distance parameter, the beamwidth may be determined based on a speed or a relative speed between devices, a magnitude of the velocity or the magnitude of the relative velocity between devices, or a magnitude of the vertical velocity or a magnitude of the relative vertical velocity between devices, which is the kinematic quantity parameter, and the inter-device beam centerline distance, which is the directional distance parameter.

Thus, when the beamwidth of the directional beam is determined based on the kinematic quantity parameter and the directional distance parameter, the beamwidth may be determined based on a combination of the kinematic quantity parameter with the directional distance parameter (hereinafter, referred to as control parameter combination).

When the beamwidth is determined based on the control parameter combination, the beamwidth may be determined to widen as the control parameter combination or the magnitude of the control parameter combination increases, and to narrow as the control parameter combination or the magnitude of the control parameter combination decreases.

When the beamwidth is determined based on the control parameter combination, the kinematic quantity parameter may include a speed or a relative speed between devices, a velocity or a relative velocity between devices, a magnitude of the velocity or a magnitude of the relative velocity between devices, a vertical velocity or a relative vertical velocity between devices, and a magnitude of the vertical velocity or a magnitude of the relative vertical velocity between devices; and may further include a displacement or a relative displacement between devices, a magnitude of the displacement or a magnitude of the relative displacement between devices, a vertical displacement or a relative vertical displacement between devices, and a magnitude of the vertical displacement or a magnitude of the relative vertical displacement between devices; and the directional distance parameter may include the actual inter-device distance and the inter-device beam centerline distance.

Preferably, when the beamwidth is determined based on the control parameter combination, the beamwidth may be determined based on a combination of the speed or the relative speed between devices, the magnitude of the velocity or the magnitude of the relative velocity, or the magnitude of the vertical velocity or the magnitude of the relative vertical velocity, which is the kinematic quantity parameter, with the inter-device beam centerline distance, which is the directional distance parameter.

When the beamwidth is determined based on the control parameter combination, the control parameter combination may be defined by dividing the kinematic quantity parameter or the magnitude of the kinematic quantity parameter by the directional distance parameter (control parameter combination = kinematic quantity parameter divided by directional distance parameter).

The control parameter combination may be defined by dividing the speed which is the kinematic quantity parameter by the actual inter-device distance which is the directional distance parameter, may be defined by dividing the speed which is the kinematic quantity parameter by the inter-device beam centerline distance which is the directional distance parameter, may be defined by dividing the relative speed between devices which is the kinematic quantity parameter by the actual inter-device distance which is the directional distance parameter, may be defined by dividing the relative speed between devices which is the kinematic quantity parameter by the inter-device beam centerline distance which is the directional distance parameter, may be defined by dividing the magnitude of the velocity which is a magnitude of the kinematic quantity parameter by the actual inter-device distance which is the directional distance parameter, may be defined by dividing the magnitude of the velocity which is a magnitude of the kinematic quantity parameter by the inter-device beam centerline distance which is the directional distance parameter, may be defined by dividing the magnitude of the relative velocity between devices which is a magnitude of the kinematic quantity parameter by the actual inter-device distance which is the directional distance parameter, may be defined by dividing the magnitude of the relative velocity between devices which is a magnitude of the kinematic quantity parameter by the inter-device beam centerline distance which is the directional distance parameter, may be defined by dividing the magnitude of the vertical velocity which is a magnitude of the kinematic quantity parameter by the actual inter-device distance which is the directional distance parameter, may be defined by dividing the magnitude of the vertical velocity which is a magnitude of the kinematic quantity parameter by the inter-device beam centerline distance which is the directional distance parameter, may be defined by dividing the magnitude of the relative vertical velocity between devices which is a magnitude of the kinematic quantity parameter by the actual inter-device distance which is the directional distance parameter, or may be defined by dividing the magnitude of the relative vertical velocity between devices which is a magnitude of the kinematic quantity parameter by the inter-device beam centerline distance which is the directional distance parameter.

In addition, it is obvious that the control parameter combination can also be defined by dividing the magnitude of the displacement or the magnitude of the relative displacement between devices, the magnitude of the vertical displacement or the magnitude of the relative displacement between devices, which are kinematic quantity parameters, by the actual inter-device distance or the inter-device beam centerline distance, which are directional distance parameters.

Preferably, the control parameter combination may be defined by dividing the speed which is the kinematic quantity parameter by the inter-device beam centerline distance which is the directional distance parameter, may be defined by dividing the relative speed between devices which is the kinematic quantity parameter by the inter-device beam centerline distance which is the directional distance parameter, may be defined by dividing the magnitude of the velocity which is the kinematic quantity parameter by the inter-device beam centerline distance which is the directional distance parameter, may be defined by dividing the magnitude of the relative velocity between devices which is the kinematic quantity parameter by the inter-device beam centerline distance which is the directional distance parameter, may be defined by dividing the magnitude of the vertical velocity which is the kinematic quantity parameter by the inter-device beam centerline distance which is the directional distance parameter, or may be defined by dividing the magnitude of the relative vertical velocity between devices which is the kinematic quantity parameter by the inter-device beam centerline distance which is the directional distance parameter.

* Target Beamwidth Calculation ***

When the actual inter-device distance $d_r$ is used instead of the inter-device beam centerline distance d and the relative velocity between devices $\vec{v}$ is used instead of the relative vertical velocity between devices $\overline{v}_t$ in calculating the target beamwidth $W_{tg}$, the target beamwidth is calculated by

[Formula 18]

$$W_{tg} \approx 2 \tan^{-1}\left(\frac{v}{d_r} \cdot T_{tg}\right)$$

Here,

$$v = |\vec{v}|.$$

*** Tangent Approximation ***

In addition, when the beamwidth of the directional beam of the reference communication device 100 is equal to or smaller than $\frac{\pi}{4}$, the following relationship can be obtained by using a tangent approximation relationship $\tan\left(\frac{x}{2}\right) \approx \frac{x}{2} \left(0 \leq x \leq \frac{\pi}{4}\right)$.

[Formula 19]

$$T_{tg} \approx \frac{d}{2v_t} W_{tg}$$

[Formula 20]

$$W_{tg} \approx \frac{2v_t}{d} T_{tg}$$

As one embodiment, when a three-layer beam codebook according to the beamwidth is configured as in FIG. 11, it can be seen that, since the beamwidth is $\frac{\pi}{2}$ in the case of a highest beam layer beam codebook, the tangent approximation relationship cannot be applied, whereas in the case of the second beam layer beam codebook, which is the next-highest beam layer, since the beamwidth is $\frac{\pi}{4}$, an approximation condition is satisfied. Therefore, it can be seen that the target beamwidth can be calculated using an approximation formula in all the lower beam layers other than the highest beam layer when an actual system is implemented. Here, a target beamwidth of the highest beam layer has no upper limit value, and may be supplemented and used by slightly adjusting a lower limit value.

In this case, it can be seen that, when the velocity or the relative velocity between devices is $\vec{v}$ and the inter-device beam centerline distance is d, the target beamwidth $W_{tg}$ for satisfying the target dwell time $T_{tg}$ should be set to be proportional to the vertical velocity or the relative vertical velocity between devices $\vec{v}_t$ (practically, the magnitude of the vertical velocity or the magnitude of the relative vertical velocity between devices, $v_t$) and to be inversely proportional to the inter-device beam centerline distance d. Further, when replacement such as $v_t \rightarrow v$ is performed, the following relationships can be obtained.

[Formula 21]

$$T_{tg} \approx \frac{d}{2v} W_{tg}$$

[Formula 22]

$$W_{tg} \approx \frac{2v}{d} T_{tg}$$

Further, when replacement such as $d \rightarrow dr$ and $v_t \rightarrow v$ is performed, the following relationships can be obtained.

[Formula 23]

$$T_{tg} \approx \frac{d_r}{2v} W_{tg}$$

[Formula 24]

$$W_{tg} \approx \frac{2v}{d_r} T_{tg}$$

In this case, it can be seen that, when the velocity or the relative velocity between devices is $\vec{v}$ and the inter-device beam centerline distance is d, the target beamwidth $W_{tg}$ for satisfying the target dwell time $T_{tg}$ should be set to be proportional to the velocity or relative velocity between devices $\vec{v}$ (practically, the magnitude of the velocity, the speed or the magnitude of the relative velocity between devices, the relative speed between devices, v) and to be inversely proportional to the inter-device beam centerline distance.

Thus, the beamwidth of the directional beam may be determined based on the kinematic quantity parameter and the directional distance parameter. The kinematic quantity parameter may include the derived kinematic quantity parameter, and these two will be hereinafter referred to as the kinematic quantity parameter.

Thus, when the beamwidth of the directional beam is determined based on the kinematic quantity parameter and the directional distance parameter, the beamwidth may be determined to widen as the kinematic quantity parameter or the magnitude of the kinematic quantity parameter increases, to narrow as the kinematic quantity parameter or the magnitude of the kinematic quantity parameter decreases, to narrow as the directional distance parameter increases, and to widen as the directional distance parameter decreases.

Thus, when the beamwidth of the directional beam is determined based on the kinematic quantity parameter and the directional distance parameter, the beamwidth may be determined to be proportional to the kinematic quantity parameter or the magnitude of the kinematic quantity parameter, and to be inversely proportional to the directional distance parameter.

When the beamwidth of the directional beam is determined based on the kinematic quantity parameter and the directional distance parameter, the kinematic quantity parameter may include a speed or a relative speed between devices, a velocity or a relative velocity between devices, a magnitude of the velocity or a magnitude of the relative velocity between devices, a vertical velocity or a relative vertical velocity between devices, and a magnitude of the vertical velocity or a magnitude of the relative vertical velocity between devices. In addition, it is obvious that the kinematic quantity parameter may further include a displacement or a relative displacement between devices, a magnitude of the displacement or a magnitude of the relative displacement between devices, a vertical displacement or a relative vertical displacement between devices, and a magnitude of the vertical displacement or a magnitude of the relative vertical displacement between devices. The directional distance parameter may include the actual inter-device distance and the inter-device beam centerline distance.

Preferably, when the beamwidth of the directional beam is determined based on the kinematic quantity parameter and the directional distance parameter, the beamwidth may be determined based on the speed or the relative speed between devices, the magnitude of the velocity or the magnitude of the relative velocity between devices, or the magnitude of the vertical velocity or the magnitude of the relative vertical velocity between devices, which is the kinematic quantity parameter, and the actual inter-device distance or the inter-device beam centerline distance, which is the directional distance parameter.

Preferably, when the beamwidth of the directional beam is determined based on the kinematic quantity parameter and the directional distance parameter, the beamwidth may be determined to widen as the speed or the relative speed between devices, the magnitude of the velocity or the magnitude of the relative velocity between devices, or the magnitude of the vertical velocity or the magnitude of the relative vertical velocity between devices, which is the kinematic quantity parameter, increases, to narrow as the speed or the relative speed between devices, the magnitude of the velocity or the magnitude of the relative velocity between devices, or the magnitude of the vertical velocity or the magnitude of the relative vertical velocity between devices, which is the kinematic quantity parameter decreases, to narrow as the actual inter-device distance or the inter-device beam centerline distance, which is the directional distance parameter, increases, and to widen as the actual inter-device distance or the inter-device beam centerline distance, which is the directional distance parameter, decreases

Preferably, when the beamwidth of the directional beam is determined based on the kinematic quantity parameter and the directional distance parameter, the beamwidth may be determined to be proportional to the speed or the relative speed between devices, the magnitude of the velocity or the relative velocity between devices, or the magnitude of the vertical velocity or the magnitude of the relative vertical velocity between devices, which is the kinematic quantity parameter, and to be inversely proportional to the actual inter-device distance or the inter-device beam centerline distance, which is the directional distance parameter.

Preferably, when the beamwidth of the directional beam is determined based on the kinematic quantity parameter and the directional distance parameter, the beamwidth may be determined to widen as the speed or the relative speed between devices, or the magnitude of the velocity or the relative velocity between devices, which is the kinematic quantity parameter, increases, to narrow as the speed or the relative speed between devices, or the magnitude of the velocity or the relative velocity between devices, which is the kinematic quantity parameter, decreases, to narrow as the actual inter-device distance, which is the directional distance parameter, increases, and to widen as the actual inter-device distance or the inter-device beam centerline distance, which is the directional distance parameter, decreases.

Preferably, when the beamwidth of the directional beam is determined based on the kinematic quantity parameter and the directional distance parameter, the beamwidth may be determined to be proportional to the speed or the relative speed between devices, the magnitude of the velocity or the relative velocity between devices, or the magnitude of the vertical velocity or the magnitude of the relative vertical velocity between devices, which is the kinematic quantity parameter, and to be inversely proportional to the actual inter-device distance or the inter-device beam centerline distance, which is the directional distance parameter.

Preferably, when the beamwidth of the directional beam is determined based on the kinematic quantity parameter and the directional distance parameter, the beamwidth may be determined to be proportional to the speed or the relative speed between devices, or the magnitude of the velocity or the relative velocity between devices, which is the kinematic quantity parameter, and to be inversely proportional to the actual inter-device distance or the inter-device beam centerline distance, which is the directional distance parameter.

Thus, when the beamwidth of the directional beam is determined based on the kinematic quantity parameter and the directional distance parameter, the beamwidth may be determined based on the combination of the kinematic quantity parameter with the directional distance parameter (hereinafter, control parameter combination).

When the beamwidth is determined based on the control parameter combination, the beamwidth may be determined to widen as the control parameter combination or the magnitude of the control parameter combination increases, and to narrow as the control parameter combination or the magnitude of the control parameter combination decreases.

When the beamwidth is determined based on the control parameter combination, the beamwidth may be determined to be proportional to the control parameter combination or the magnitude of the control parameter combination.

When the beamwidth is determined based on the control parameter combination, the kinematic quantity parameter may include a speed or a relative speed between devices, a velocity or a relative velocity between devices, a magnitude of the velocity or a magnitude of relative velocity between devices, a vertical velocity or a relative vertical velocity between devices, and a magnitude of the vertical velocity or a magnitude of the relative vertical velocity between devices, and may further include a displacement or a relative displacement between devices, a magnitude of the displacement or a magnitude of the relative displacement between devices, a vertical displacement or a relative vertical displacement between devices, and a magnitude of the vertical displacement or a magnitude of the relative vertical displacement between devices; and the directional distance parameter may include the actual inter-device distance and the inter-device beam centerline distance.

Preferably, when the beamwidth is determined based on the control parameter combination, the beamwidth may be determined based on a combination of the speed or the relative speed between devices, the magnitude of the velocity or the magnitude of the relative velocity, or the magnitude of the vertical velocity or the magnitude of the relative vertical velocity between devices, which is the kinematic quantity parameter, with the actual inter-device distance or the inter-device beam centerline distance, which is the directional distance parameter.

Preferably, when the beamwidth is determined based on the control parameter combination, the beamwidth may be determined based on a combination of the speed or the relative speed between devices, the magnitude of the velocity or the magnitude of the relative velocity, which are the kinematic quantity parameter, with the actual inter-device distance or the inter-device beam centerline distance, which is the directional distance parameter.

When the beamwidth is determined based on the control parameter combination, the control parameter combination may be defined by dividing the kinematic quantity parameter or the magnitude of the kinematic quantity parameter by the directional distance parameter (control parameter combination = kinematic quantity parameter divided by directional distance parameter).

The control parameter combination may be defined by dividing the speed which is the kinematic quantity parameter by the actual inter-device distance which is the directional distance parameter, may be defined by dividing the speed which is the kinematic quantity parameter by the inter-device beam centerline distance which is the directional distance parameter, may be defined by dividing the relative speed between devices which is the kinematic quantity parameter by the actual inter-device distance which is the directional distance parameter, may be defined by dividing the relative speed between devices which is the kinematic quantity parameter by the inter-device beam centerline distance which is the directional distance parameter, may be defined by dividing the magnitude of the velocity which is a magnitude of the kinematic quantity parameter by the actual inter-device distance which is the directional distance parameter, may be defined by dividing the magnitude of the velocity which is a magnitude of the kinematic quantity parameter by the inter-device beam centerline distance which is the directional distance parameter, may be defined by dividing the magnitude of the relative velocity between devices which is a magnitude of the kinematic quantity parameter by the actual inter-device distance which is the directional distance parameter, may be defined by dividing the magnitude of the relative velocity between devices which is a magnitude of the kinematic quantity parameter by the inter-device beam centerline distance which is the directional distance parameter, may be defined by dividing the magnitude of the vertical velocity which is a magnitude of the kinematic quantity parameter by the actual inter-device distance which is the directional distance parameter, may be defined by dividing the magnitude of the vertical velocity which is a magnitude of the kinematic quantity parameter by the inter-device beam centerline distance which is the directional distance parameter, may be defined by dividing the magnitude of the relative vertical velocity between devices which is a magnitude of the kinematic quantity parameter by the actual inter-device distance which is the directional distance parameter, or may be defined by dividing the magnitude of the relative vertical velocity between devices which is a magnitude of the kinematic quantity parameter by the inter-device beam centerline distance which is the directional distance parameter.

In addition, it is obvious that the control parameter combination can also be defined by dividing the magnitude of the displacement or the magnitude of the relative displacement between devices, the magnitude of the vertical displacement or the magnitude of the relative displacement between devices, which are kinematic quantity parameters, by the actual inter-device distance or the inter-device beam centerline distance, which are directional distance parameters.

Preferably, the control parameter combination may be defined by dividing the speed which is the kinematic quantity parameter by the actual inter-device distance which is the directional distance parameter, may be defined by dividing the relative speed between devices which is the kinematic quantity parameter by the actual inter-device distance which is the directional distance parameter, may be defined by dividing the magnitude of the velocity which is the kinematic quantity parameter by the actual inter-device distance which is the directional distance parameter, or may be defined by dividing the magnitude of the relative velocity between devices which is the kinematic quantity parameter by the actual inter-device distance, which is the directional distance parameter.

*** Beamwidth Control Using Multi-layer Beam Codebook ***

It can be seen that, when the velocity or the relative velocity between devices $\vec{v}$ and the inter-device beam centerline distance d are given, the target beamwidth $W_{tg}$ for satisfying the target dwell time $T_{tg}$ can be obtained as in [Formula 17], [Formula 18], or [Formula 20]. However, it may not be practically possible to adjust the beamwidth to an arbitrary value for system implementation. Instead, it is more realistic to adjust the beamwidth by having the multi-layer beam codebook according to beamwidth as in FIG. 11 and by switching the beam layer according to the beamwidth. Therefore, in the present disclosure, a directional communication system that dynamically controls the beamwidth by having the multi-layer beam codebook according to beamwidth and by switching the beam layer as needed is considered.

As an embodiment, a multi-layer beam codebook configured of L beam layers according to beamwidth is considered. In this case, the beam layers are defined in a descending order of beamwidth, a highest beam layer with a largest beamwidth is a first layer, the beamwidth representing the first layer is $W^1$, a lowest beam layer with a minimum beamwidth is an L-th layer, and a beamwidth representing the L-th layer is $W^L$. In this case, the following relationship is satisfied.

[Formula 25]

$$W^1 > W^2 > \cdots > W^l > \cdots > W^L$$

Here, $W^l$ is a representative beamwidth corresponding to $l$-th layer.

When the vertical velocity or the relative vertical velocity between devices $\vec{v}_t$, and the inter-device beam centerline distance d are given, and when the currently used beam layer is $l$-th layer and a representative beamwidth is $W^l$, the average beam dwell time is

[Formula 26]

$$T_{dw}^l = \frac{d}{v_t} \tan\left(\frac{1}{2} W^l\right)$$

Therefore, the average beam dwell times for the representative beamwidths corresponding to the respective layers have the following relationship.

[Formula 27]

$$T_{dw}^1 > T_{dw}^2 > \cdots > T_{dw}^l > \cdots > T_{dw}^L$$

When the target dwell time $T_{tg}$ is equal to or smaller than $T_{dw}^l$ and greater than $T_{dw}^{l+1}$, that is, $T_{dw}^l \geq T_{tg}$ for the given vertical velocity or the relative vertical velocity between devices $\vec{v}_t$ and the inter-device beam centerline distance d, an average beam dwell time of the current $l$-th layer is greater than the target dwell time, and therefore, the current beamwidth in use of the directional beam may be maintained, but when the beamwidth is decreased to $W^{l+1}$, an average beam dwell time of ($l$+1)-layer becomes smaller than the target dwell time $T_{tg}$, that is, $T_{dw}^{l+1} < T_{tg}$, and therefore, a system load may be grown excessively, which may result in system performance degradation or a communication interruption.

Therefore, when the target dwell time $T_{tg}$ is equal to or smaller than $T_{dw}^l$ and greater than $T_{dw}^{l+1}$ for the given relative vertical velocity between devices $\vec{v}_t$ and the inter-device beam centerline distance d, the beamwidth of the directional beam can be controlled so that

[Formula 28]

$$T_{dw}^l \geq T_{tg} > T_{dw}^{l+1} \rightarrow W^l (1 \leq l \leq L)$$

is satisfied.

When the average beam dwell time $T_{dw}^1$ of the highest beam layer is smaller than $T_{tg}$, that is, $T_{dw}^1 < T_{tg}$, there is no larger beamwidth that can replace the highest beam layer beamwidth $W^1$, and therefore, the highest beam layer beam codebook with the beamwidth $W^1$ is maintained. Similarly, when a minimum beam switching time $T_{dw}^L$ of the lowest beam layer is greater than $T_{tg}$, that is, $T_{dw}^L > T_{tg}$, there is no smaller beamwidth that can replace the lowest beam layer beamwidth $W^L$, and therefore, the lowest beam layer beam codebook with the beamwidth of $W^L$ is maintained.

*** Multi-layer Beam Codebook Beamwidth Control: Control Based on Beamwidth ***

In other words, when the target dwell time $T_{tg}$ is given and the relative vertical velocity between devices $\vec{v_t}$ and the inter-device beam centerline distance d are given, the target beamwidth for maintaining the average beam dwell time greater than or equal to the target dwell time $T_{tg}$ is given as $W_{tg} = 2\tan^{-1}\left(\frac{v_t}{d} \cdot T_{tg}\right)$. Accordingly, the beamwidth can be controlled by selecting the beam layer according to the following criterion. In other words, the beamwidth of the directional beam can be controlled so that

[Formula 29]

$$W^l \geq W_{tg} > W^{l+1} \rightarrow W^l \ (1 \leq l \leq L).$$

is satisfied.

When the beamwidth $W^1$ of the highest beam layer is smaller than $W_{tg}$, that is, $W^1 < W_{tg}$, there is no wider beamwidth that can replace the highest beam layer beamwidth $W^1$, and therefore, the highest beam layer beam codebook with the beamwidth of $W^1$ is maintained. Similarly, when the minimum beamwidth $W^L$ of the lowest beam layer is greater than $W_{tg}$, that is, $W^L > W_{tg}$, there is no smaller beamwidth that can replace the lowest beam layer beamwidth $W^L$, and therefore, the lowest beam layer beam codebook with the beamwidth of $W^L$ is maintained.

*** Calculation of Inter-device Beam Centerline Distance ***

It has been confirmed that the beam centerline distance between the reference communication device 100 and the other device can be accurately calculated from the actual inter-device distance when an angle at which the other device deviates from the beam centerline of the reference communication device 100 is known. However, in the actual communication environment, when information on the angle at which the other device deviates from the beam centerline of the reference communication device 100 cannot be obtained, the actual inter-device distance may be used instead of an accurate inter-device beam centerline distance.

Therefore, one method of obtaining the actual inter-device distance instead of obtaining the inter-device beam centerline distance will be described by a way of example. An actual distance between the reference communication device 100 and the other device is periodically calculated based on periodic position updating of the reference communication device 100 and the other device, and a communication device with a varying position should periodically transmit its position to a counterpart communication device. In this case, a position-based actual distance is calculated based on the positions of the reference communication device 100 and the other device. In another embodiment, the reference communication device 100 and the other device periodically exchange time stamps each other. With the time stamps, the reference communication device 100 and the other device can calculate radio wave arrival times between the two devices. Using the radio wave arrival times calculated, an actual inter-device distance between the two devices can also be estimated. In addition, with the recent development of technology for estimating a position of a terminal device using propagation characteristics of a radio signal, it is expected that information such as a position and distance of a terminal can be proactively measured by a base station device.

FIG. 16 is a flowchart of a directional beamwidth control method.

Referring to FIG. 16, the directional beamwidth control method is a method in which a reference communication device including an antenna part configured to generate a plurality of directional beams, a transceiver part including at least one transceiver unit (TXRU) configured to supply signal to the antenna part or receive signal from the antenna part, and a control part configured to control the beam generation of the antenna part and control TXRU assignment of the transceiver part and signal transmission and reception performs communication with a target communication device, the directional beamwidth control method including a step (S1610) of generating a kinematic quantity parameter according to movement of one of the reference communication device and the other communication device; a step (S1620) of generating a directional distance parameter of the reference communication device and the other communication device; a step (S 1630) of generating a direction of the directional beam of the reference communication device; and a step (S1640) of determining a beamwidth based on the kinematic quantity parameter and the directional distance parameter.

Further, the step (S1620) of generating the directional distance parameter may be a step of determining one of an actual inter-device distance between the reference communication device and the other communication device and an inter-device beam centerline distance obtained by projecting the actual inter-device distance onto the centerline of the directional beam generated from the reference communication device to generate the parameter.

Further, the step (S1610) of generating the kinematic quantity parameter may be a step of generating the parameter based on one of a speed, a velocity, and a vertical velocity of the reference communication device or one of a relative speed between devices, a relative velocity between devices, and a relative vertical velocity between devices of the reference communication device and the other communication device.

The step (S1640) of determining the beamwidth may be a step of determining the beamwidth to be widened as the kinematic quantity parameter or the magnitude of the kinematic quantity parameter increases and to be narrowed as the kinematic quantity parameter or the magnitude of the kinematic quantity parameter decreases, or determining the beamwidth to be narrowed as the directional distance parameter increases and to be widened as the directional distance parameter decreases.

The step (S1640) of determining the beamwidth may be a step of determining the beamwidth based on the control parameter combination defined by dividing the kinematic quantity parameter or the magnitude of the kinematic quantity parameter by the directional distance parameter.

The step (S1630) of determining the beamwidth may be a step of determining the beamwidth to be widened as the control parameter combination or the magnitude of the control parameter combination increases and to be narrowed as the control parameter combination or the magnitude of the control parameter combination decreases.

The description of the present disclosure described above is for illustrative purposes, and a person having ordinary knowledge in the technical field to which the present disclosure belongs will understand that the present disclosure can be easily modified into other specific forms without changing the technical idea or essential characteristics of the present disclosure. Therefore, the embodiments described above should be understood as being exemplary in all respects and not limiting.

The scope of present disclosure is indicated by the claims to be described below rather than the detailed description above, and all changes or modifications derived from the meaning and scope of the claims and equivalent concepts thereof should be construed as being included in the scope of present disclosure.

**Claims**

1. A directional beamwidth control device included in a reference communication device and performing communication with a target communication device, the directional beamwidth control device comprising:

   an antenna part configured to generate a plurality of directional beams;
   a transceiver part including at least one transceiver unit (TXRU) configured to supply signal to the antenna part or receive signal from the antenna part; and
   a control part configured to control the beam generation of the antenna part, and to control TXRU assignment of the transceiver part and signal transmission and reception, wherein
   the control part controls the antenna part to generate a beam by determining a direction and beamwidth of the beam, and
   performs control to determine the beamwidth based on a kinematic quantity parameter according to movement of at least one of the reference communication device and other communication device and a directional distance parameter of the reference communication device and the other communication device,
   the directional distance parameter is a parameter for quantifying a distance along a transmission direction between the reference communication device and the other communication device, and
   the kinematic quantity parameter is a parameter for quantifying motion characteristics according to movement of at least one of the reference communication device and the other communication device.

2. The directional beamwidth control device of claim 1, wherein

   the directional distance parameter is one of an actual inter-device distance and an inter-device beam centerline distance between the reference communication device and the other communication device, and
   the inter-device beam centerline distance is a component of the actual inter-device distance projected onto a centerline of a beam generated from the reference communication device.

3. The directional beamwidth control device of claim 1, wherein the kinematic quantity parameter is a kinematic quantity of one of a time, a position, a distance traveled, a displacement, a vertical displacement, a speed, a velocity, a vertical velocity, an acceleration, a relative time between devices, a relative position between devices, a relative distance traveled between devices, a relative displacement between devices, a relative vertical displacement between devices, a relative speed between devices, a relative velocity between devices, a relative vertical velocity between devices, and a relative acceleration between devices, or a kinematic quantity derived from a combination of at least two thereof.

4. The directional beamwidth control device of claim 1, wherein

the kinematic quantity parameter further includes a derived kinematic quantity parameter,
wherein, the derived kinematic quantity parameter is generated from a conversion of the kinematic quantity for converting a vector kinematic quantity to a scalar kinematic quantity, a combination of kinematic quantities for deriving another kinematic quantity from a combination of at least two kinematic quantities, or a conversion of the combination of kinematic quantities or a combination of the derived kinematic quantities.

5. The directional beamwidth control device of claim 1, wherein

when determining the beamwidth of the directional beam based on the kinematic quantity parameter and the directional distance parameter,
the beamwidth is determined
to widen as the kinematic quantity parameter or a magnitude of the kinematic quantity parameter increases and to narrow as the kinematic quantity parameter or the magnitude of the kinematic quantity parameter decreases, or to narrow as the directional distance parameter increases and to widen as the directional distance parameter decreases.

6. The directional beamwidth control device of claim 1, wherein,

when determining the beamwidth of the directional beam based on the kinematic quantity parameter and the directional distance parameter,
the beamwidth is determined to be proportional to the kinematic quantity parameter or a magnitude of the kinematic quantity parameter or to be inversely proportional to the directional distance parameter.

7. The directional beamwidth control device of claim 1, wherein,

when determining the beamwidth of the directional beam based on the kinematic quantity parameter and the directional distance parameter,
the beamwidth is determined based on a control parameter combination that is a combination of the kinematic quantity parameter and the directional distance parameter.

8. The directional beamwidth control device of claim 7, wherein the control parameter combination is defined by dividing the kinematic quantity parameter or a magnitude of the kinematic quantity parameter by the directional distance parameter.

9. The directional beamwidth control device of claim 7, wherein the control parameter combination is defined

by dividing a speed which is the kinematic quantity parameter by an actual inter-device distance which is the directional distance parameter,
by dividing the speed which is the kinematic quantity parameter by an inter-device beam centerline distance which is the directional distance parameter,
by dividing a relative speed between devices which is the kinematic quantity parameter by the actual inter-device distance which is the directional distance parameter,
by dividing the relative speed between devices which is the kinematic quantity parameter by the inter-device beam centerline distance which is the directional distance parameter,
by dividing a magnitude of a velocity which is a magnitude of the kinematic quantity parameter by the actual inter-device distance which is the directional distance parameter,
by dividing the magnitude of the velocity which is a magnitude of the kinematic quantity parameter by the inter-device beam centerline distance which is the directional distance parameter,
by dividing a magnitude of a relative velocity between devices which is a magnitude of the kinematic quantity parameter by the actual inter-device distance which is the directional distance parameter,
by dividing the magnitude of the relative velocity between devices which is a magnitude of the kinematic quantity parameter by the inter-device beam centerline distance which is the directional distance parameter,
by dividing a magnitude of a vertical velocity which is a magnitude of the kinematic quantity parameter by the actual inter-device distance which is the directional distance parameter,
by dividing the magnitude of the vertical velocity which is a magnitude of the kinematic quantity parameter by the inter-device beam centerline distance which is the directional distance parameter,

by dividing a magnitude of a relative vertical velocity between devices which is a magnitude of the kinematic quantity parameter by the actual inter-device distance which is the directional distance parameter, or
by dividing the magnitude of the relative vertical velocity between devices which is a magnitude of the kinematic quantity parameter by the inter-device beam centerline distance which is the directional distance parameter.

10. The directional beamwidth control device of claim 7, wherein,
when determining the beamwidth based on the control parameter combination, the beamwidth is determined to widen as the control parameter combination or a magnitude of the control parameter combination increases and to narrow as the control parameter combination or the magnitude of the control parameter combination decreases.

11. The directional beamwidth control device of claim 7, wherein,
when determining the beamwidth based on the control parameter combination, the beamwidth is determined to be proportional to the control parameter combination or a magnitude of the control parameter combination.

12. The directional beamwidth control device of claim 1, wherein

the antenna part includes at least one antenna set according to an antenna array structure composed of at least two antenna elements or a parasitic array structure according to a parasitic array antenna including one active element and at least two parasitic elements,
the at least one antenna set generates a plurality of directional beams,
when the at least one antenna set generating the plurality of directional beams, one antenna set generates the plurality of directional beams or each of at least two antenna sets generates at least one directional beam, and
when each of the at least two antenna sets generating the at least one directional beam, each of the at least two antenna sets generates at least one different directional beam or the at least two antenna sets generate at least one same directional beam.

13. The directional beamwidth control device of claim 1, wherein

the beamwidth
is a control decision variable for controlling an operation of the reference communication device, and
is one of a required beamwidth, a beamwidth limit, a desired beamwidth, an optimum beamwidth, a representative value in a beamwidth section, a representative beamwidth value of a beam codebook, and a beamwidth estimate.

14. The directional beamwidth control device of claim 1, wherein

when determining the beamwidth of the directional beam, the determination of the beamwidth includes having a multi-layer beam codebook according to beamwidth, and is to determining the beam layer of the multi-layer beam codebook corresponding to a beamwidth, and
beamwidths of respective beam codebook components belonging to the same beam layer of the multi-layer beam codebook according to beamwidth are the same or different.

# Figs. 1

# Figs. 2

Figs. 3

Figs. 4

# Figs. 5

(a)

X Individual
dual polarized
antenna element

(b)

Sub
antenna
array

Figs. 6

Figs. 7

# Figs. 8

Figs. 9

PSA1 for beam ($\varphi \in [\varphi_1, \varphi_2]$)

Antenna Set 1

Antenna Set 2

PSA2 for beam ($\varphi \in [\varphi_1, \varphi_2]$)

SW

SW

Gain Control ($A$)

TXRU

Controller

$\varphi = \varphi_2$

$\varphi = \varphi_1$

$\varphi = \varphi_2$

$\varphi = \varphi_1$

Figs. 10

Figs. 11

$\Phi_1$ $\qquad$ $\Phi_2$ $\qquad$ $\Phi_3$

(a) $\qquad$ (b) $\qquad$ (c)

Figs. 12

Figs. 13

# Figs. 14

$$W^2 = 2\tan^{-1}\left(\frac{|\boldsymbol{v_t}|}{d_2} \cdot T_{tg}\right) \qquad W^1 = 2\tan^{-1}\left(\frac{|\boldsymbol{v_t}|}{d_1} \cdot T_{tg}\right)$$

# Figs. 15

$$W^2 = 2\tan^{-1}\left(\frac{|v_{t2}|}{d_2} \cdot T_{tg}\right) \qquad W^1 = 2\tan^{-1}\left(\frac{|v_{t1}|}{d_1} \cdot T_{tg}\right)$$

Figs. 16

| Generate motion physical quantity parameter according to movement of one of reference communication device and other communication device | S1610 |

| Generate directional distance parameter of reference Communication device and other communication device | S1620 |

| Generate direction of directional beam of reference communication device | S1630 |

| Determine beamwith based on motion physical quantity parameter and directional distance parameter | S1640 |

Europäisches
Patentamt

European
Patent Office

Office européen
des brevets

**EUROPEAN SEARCH REPORT**

Application Number

EP 24 21 6636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/009927 A1 (QUALCOMM INC [US]) 2 February 2023 (2023-02-02) | 1-13 | INV. H04B7/06 |
| Y | * figures 4, 5, 12 * * paragraphs [0085] - [0088], [0142] - [0144] * | 14 | |
| X | US 2022/039081 A1 (LIU BIN [US] ET AL) 3 February 2022 (2022-02-03) | 1-13 | |
| Y | * figure 7B * * paragraphs [0062], [0067], [0070], [0071] * | 14 | |
| X | CN 116 418 383 A (UNIV XIDIAN) 11 July 2023 (2023-07-11) * section: Contents of the invention * | 1-4, 12-14 | |
| X | YANG ZHICHENG ET AL: "Sensor-Assisted Codebook-Based Beamforming for Mobility Management in 60 GHz WLANs", 2015 IEEE 12TH INTERNATIONAL CONFERENCE ON MOBILE AD HOC AND SENSOR SYSTEMS, IEEE, 19 October 2015 (2015-10-19), pages 333-341, XP032845674, DOI: 10.1109/MASS.2015.58 [retrieved on 2015-12-28] | 1-14 | |
| Y | * section IV, section V * * figures 1, 3, 6, 9 * | 14 | |

TECHNICAL FIELDS SEARCHED (IPC)

H04B

The present search report has been drawn up for all claims

| Place of search | Date of completion of the search | Examiner |
|---|---|---|
| Munich | 18 March 2025 | Vucic, Jelena |

EPO FORM 1503 03.82 (P04C01)

**ANNEX TO THE EUROPEAN SEARCH REPORT
ON EUROPEAN PATENT APPLICATION NO.**

EP 24 21 6636

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2025

| Patent document cited in search report | Publication date | Patent family member(s) | Publication date |
|---|---|---|---|
| WO 2023009927 A1 | 02-02-2023 | CN 117693906 A | 12-03-2024 |
| | | EP 4378088 A1 | 05-06-2024 |
| | | KR 20240040736 A | 28-03-2024 |
| | | US 2023033336 A1 | 02-02-2023 |
| | | WO 2023009927 A1 | 02-02-2023 |
| US 2022039081 A1 | 03-02-2022 | CN 112823556 A | 18-05-2021 |
| | | US 2022039081 A1 | 03-02-2022 |
| | | WO 2020062859 A1 | 02-04-2020 |
| CN 116418383 A | 11-07-2023 | NONE | |

EPO FORM P0459

For more details about this annex : see Official Journal of the European Patent Office, No. 12/82

**REFERENCES CITED IN THE DESCRIPTION**

**Patent documents cited in the description**

- KR 1020040059657